# EUROPEAN PATENT APPLICATION

(11) **EP 4 742 748 A1**
(43) Date of publication of application: **13.05.2026**
(21) Application number: 23944078.7
(22) Date of filing: 06.07.2023
(51) Int. Cl.: H04W 36/00

(54) **RANDOM ACCESS METHOD AND APPARATUS, AND DEVICE AND STORAGE MEDIUM**

(71) Applicant: Beijing Xiaomi Mobile Software Co., Ltd., Beijing 100085 (CN)
(72) Inventor: LUO, Xingyi, Beijing 100085 (CN)
(74) Representative: Dehns Germany Partnerschaft mbB
(86) International application number: PCT/CN2023/106171
(87) International publication number: WO 2025/007351

(57) **Abstract**

The present disclosure relates to a random access method and apparatus, and a device and a storage medium. The random access method comprises: sending first information to a first network device, wherein the first information is used for the first network device to measure a timing advance (TA), and the first network device is a network device of a candidate cell; and receiving second information sent by a second network device, wherein the second information comprises a TA corresponding to the first network device, and the second network device is a network device of a serving cell. In the present disclosure, a TA of a candidate cell is sent to a terminal by means of a serving cell, such that the terminal can receive, by means of the serving cell, the TA corresponding to the candidate cell, thereby reducing a delay of cell handover, and improving the efficiency of cell handover.

## Description

### TECHNICAL FIELD

The present disclosure relates to the field of communication technologies, and in particular to a random access method and apparatus, a device and a storage medium.

### BACKGROUND

In the related arts, in order to reduce the delay of traditional handover, multiple candidate cells are pre-configured for a terminal. As the terminal moves, a network device determines whether the handover is needed based on beam measurement results of a serving cell and the candidate cells reported by the terminal. When the cell handover is required, the serving cell triggers, through cell handover signaling, the terminal to hand over to a target cell. The target cell is selected from the multiple candidate cells.

### SUMMARY

When a terminal performs the cell handover, it often needs to obtain the Timing Advances (TAs) corresponding to different cells in advance. However, if a cell for which the TA is measured is not a serving cell connected to the terminal, it is impossible for the terminal to receive the TA, resulting in problems such as excessive cell handover delay or interruption.

Embodiments of the present disclosure provide a random access method and apparatus, a device and a storage medium.

According to a first aspect of embodiments of the present disclosure, there is provided a random access method, which is performed by a terminal and includes: sending first information to a first network device, wherein the first information is configured to determine a Timing Advance (TA), the TA is a TA corresponding to the first network device, and the first network device is a network device of a candidate cell; and receiving second information sent by a second network device, wherein the second information is configured to indicate the TA, and the second network device is a network device of a serving cell.

According to a second aspect of embodiments of the present disclosure, there is provided a random access method, which is performed by a second network device and includes: sending second information, wherein the second information is configured to indicate a Timing Advance (TA), the TA is determined by a first network device based on first information, the TA is a TA corresponding to the first network device, the second network device is a network device of a serving cell, and the first network device is a network device of a candidate cell.

According to a third aspect of embodiments of the present disclosure, there is provided a random access method, which includes: sending, by a terminal, first information to a first network device, wherein the first information is configured to determine a Timing Advance (TA), the TA is a TA corresponding to the first network device, and the first network device is a network device of a candidate cell; sending, by a second network device, second information to the terminal, wherein the second information is configured to indicate the TA, and the second network device is a network device of a serving cell; and receiving, by the terminal, the second information sent by the second network device.

According to a fourth aspect of embodiments of the present disclosure, there is provided a terminal, including: a transceiving module; the transceiving module is configured to send first information to a first network device, wherein the first information is configured to determine a Timing Advance (TA), the TA is a TA corresponding to the first network device, and the first network device is a network device of a candidate cell; and the transceiving module is further configured to receive second information sent by a second network device, wherein the second information is configured to indicate the TA, and the second network device is a network device of a serving cell.

According to a fifth aspect of embodiments of the present disclosure, there is provided a network device, including: a transceiving module; the transceiving module is configured to send second information, wherein the second information is configured to indicate a Timing Advance (TA), the TA is determined by a first network device based on first information, the TA is a TA corresponding to the first network device, the second network device is a network device of a serving cell, and the first network device is a network device of a candidate cell.

According to a sixth aspect of embodiments of the present disclosure, there is provided a terminal, including: one or more processors; wherein the terminal is configured to perform the first aspect and any one of the random access methods in the first aspect.

According to a seventh aspect of embodiments of the present disclosure, there is provided a network device, including: one or more processors; wherein the network device is configured to perform the second aspect and any one of the random access methods in the second aspect.

According to an eighth aspect of embodiments of the present disclosure, there is provided a communication system, including a terminal and a network device, wherein the terminal is configured to implement the first aspect and any one of the random access methods in the first aspect, and the network device is configured to implement the second aspect and any one of the random access methods in the second aspect.

According to a ninth aspect of embodiments of the present disclosure, there is provided a storage medium having instructions stored, wherein the instructions, when run on a communication device, cause the communication device to perform he first aspect and any one of the random access methods in the first aspect or the second aspect and any one of the random access methods in the second aspect.

In the present disclosure, the TA of the candidate cell is sent to the terminal via the serving cell, so that the terminal can receive the TA corresponding to the candidate cell via the serving cell, thereby reducing the cell handover delay and improving the cell handover efficiency.

### BRIEF DESCRIPTION OF THE DRAWINGS

In order to more clearly explain the technical solutions in the embodiments of the present disclosure, the following drawings are introduced as required for describing the embodiments. The following drawings are only some of the embodiments of the present disclosure and do not limit the scope of protection of the present disclosure.
FIG. 1a shows a schematic diagram of an architecture of a communication system according to an embodiment of the present disclosure.
FIG. 1b shows a schematic diagram of a scenario in which a terminal moves according to an embodiment of the present disclosure.
FIG. 1c shows a schematic interactive diagram of cell handover signaling according to an embodiment of the present disclosure.
FIG. 2 shows a schematic interactive diagram of a random access method according to an embodiment of the present disclosure.
FIG. 3a shows a flowchart of a random access method according to an example embodiment.
FIG. 3b shows a flowchart of another random access method according to an example embodiment.
FIG. 3c shows a flowchart of yet another random access method according to an example embodiment.
FIG. 3d shows a flowchart of still another random access method according to an example embodiment.
FIG. 3e shows a flowchart of another random access method according to an example embodiment.
FIG. 4a shows a flowchart of yet another random access method according to an example embodiment.
FIG. 4b shows a flowchart of still another random access method according to an example embodiment.
FIG. 4c shows a flowchart of another random access method according to an example embodiment.
FIG. 4d shows a flowchart of yet another random access method according to an example embodiment.
FIG. 4e shows a flowchart of still another random access method according to an example embodiment.
FIG. 4f shows a flowchart of another random access method according to an example embodiment.
FIG. 4g shows a flowchart of yet another random access method according to an example embodiment.
FIG. 5 shows a flowchart of still another random access method according to an example embodiment.
FIG. 6a shows a schematic diagram of a first time window according to an example embodiment.
FIG. 6b shows a schematic diagram of another first time window according to an example embodiment.
FIG. 6c shows a schematic diagram of yet another first time window according to an example embodiment.
FIG. 7a shows a schematic diagram of a random access apparatus according to an example embodiment.
FIG. 7b shows a schematic diagram of another random access apparatus according to an example embodiment.
FIG. 8a shows a schematic diagram of a communication device according to an example embodiment.
FIG. 8b shows a schematic diagram of a chip according to an example embodiment.

### DETAILED DESCRIPTION

Embodiments of the present disclosure provide a random access method and apparatus, a device and a storage medium.

In a first aspect, embodiments of the present disclosure provide a random access method, which is performed by a terminal and includes: sending first information to a first network device, wherein the first information is configured to determine a Timing Advance (TA), the TA is a TA corresponding to the first network device, and the first network device is a network device of a candidate cell; and receiving second information sent by a second network device, wherein the second information is configured to indicate the TA, and the second network device is a network device of a serving cell.

In the above embodiments, the TA of the candidate cell is sent to the terminal via the serving cell, so that the terminal can receive the TA corresponding to the candidate cell via the serving cell. For example, in a cell handover scenario, the cell handover delay can be reduced and the cell handover efficiency can be improved.

In conjunction with some embodiments of the first aspect, receiving the second information sent by the second network device includes: receiving, within a first time window, the second information sent by the second network device, wherein the first time window is determined based on a first time domain position and a first duration.

In the above embodiments, the first time window for sending the second information is determined, so as to receive the second information based on the first time window, which enables the terminal to accurately receive the second information to obtain the TA corresponding to the candidate cell. For example, in the cell handover scenario, the cell handover delay can be reduced and the cell handover efficiency can be improved.

In conjunction with some embodiments of the first aspect, the first duration is determined by at least one of the following manners: the first duration is determined based on a first predefined rule, wherein the first duration is predefined by the first predefined rule; the first duration is determined based on a network device configuration; or the first duration is determined based on a second duration and a third duration, wherein the second duration is a duration configured by the network device, and the third duration is configured by the network device or determined based on the first predefined rule.

In the above embodiments, multiple configuration modes for the duration corresponding to the first time window are provided to be applicable to receiving the second information based on the first time window in various scenarios, thereby improving universality.

In conjunction with some embodiments of the first aspect, the first duration is determined based on the second duration and the third duration, and the second information includes information for indicating a system frame number.

In the above embodiments, the system frame number can accurately indicate which frame the received second information corresponds to, thereby effectively avoiding RAR conflicts between different frames.

In conjunction with some embodiments of the first aspect, the first time domain position is determined by at least one of the following manners: the first time domain position is determined based on a second predefined rule, wherein the first time domain position is predefined by the second predefined rule; the first time domain position is determined based on a network device configuration; or the first time domain position is determined based on a second time domain position and a fourth duration, wherein the second time domain position is an end position of a random access channel occasion (RO) for sending the first information, and the fourth duration is configured to indicate a time domain offset between the first time domain position and the second time domain position.

In the above embodiments, multiple configuration modes are provided for the starting position corresponding to the first time window, so as to be applicable to receiving the second information based on the first time window in various scenarios, improving universality.

In conjunction with some embodiments of the first aspect, the first time domain position is determined based on the second time domain position and the fourth duration, and the first time domain position is a first Orthogonal Frequency Division Multiplexing (OFDM) symbol that is offset by the fourth duration from the second time domain position.

In the above embodiments, a relatively specific first time domain position is provided to determine an accurate first time window based on the first time domain position and to receive the second information, which enables the terminal to accurately receive the second information to obtain the TA corresponding to the candidate cell. For example, in the cell handover scenario, the cell handover delay can be reduced and the cell handover efficiency can be improved.

In conjunction with some embodiments of the first aspect, the first time domain position is determined based on the second time domain position and the fourth duration, and the first time domain position is a first OFDM symbol of a Control Resource Set (CORESET) corresponding to a type 1 common search space set for the terminal to receive a physical downlink control channel of the first network device or the second network device after a position that is offset by the fourth duration from the second time domain position.

In the above embodiments, a relatively specific first time domain position is provided to determine an accurate first time window based on the first time domain position and to receive the second information, which enables the terminal to accurately receive the second information to obtain the TA corresponding to the candidate cell. For example, in the cell handover scenario, the cell handover delay can be reduced and the cell handover efficiency can be improved.

In conjunction with some embodiments of the first aspect, the method further includes: receiving third information sent by the second network device, wherein the third information is configured to indicate to send the first information to the first network device.

In the above embodiments, the network device can trigger, through signaling, the terminal to obtain the TA of the candidate cell, thereby avoiding the terminal from frequently performing random access to obtain the cell TA based on itself, and improving communication stability.

In conjunction with some embodiments of the first aspect, sending the first information to the first network device includes: sending the first information to the first network device based on a target RO, wherein the target RO is determined by at least one of the following manners: the target RO is determined based on fourth information, wherein the third information includes the fourth information, and the fourth information is configured to indicate the target RO; the target RO is determined based on the fourth information and fifth information, wherein the third information includes the fourth information and the fifth information, wherein the fourth information is configured to indicate a plurality of ROs, and the fifth information is configured to indicate one of the plurality of ROs as the target RO; or the target RO is determined based on the fourth information and a third predefined rule, wherein the third information includes the fourth information, the fourth information is configured to indicate the plurality of ROs, and the third predefined rule predefines selection of one of the plurality of ROs as the target RO.

In the above embodiments, multiple methods for determining the target RO are provided to be applicable to accurately determining the first time window in various RO scenarios, which enables accurate reception of the second information based on the first time window to obtain the TA corresponding to the candidate cell. For example, in the cell handover scenario, the cell handover delay can be reduced and the cell handover efficiency can be improved.

In conjunction with some embodiments of the first aspect, the target RO is determined based on the fourth information and the third predefined rule, and the method further includes: sending sixth information, wherein the sixth information is configured to indicate the selected RO to the second network device.

In the above embodiments, the terminal can report its selected RO, so that the RO determined by the second network device is the same as the RO selected by the terminal, thereby avoiding the terminal and the second network device from having different first time window positions due to different ROs to make the terminal fail to receive the second information.

In conjunction with some embodiments of the first aspect, the method further includes: sending seventh information, wherein the seventh information is configured to indicate a downlink time difference between the first network device and the second network device.

In the above embodiments, the terminal can report the downlink time difference between different network devices to avoid different first time window positions due to the asynchronous problem between cells to make the terminal fail to receive the second information.

In conjunction with some embodiments of the first aspect, the second information is carried in at least one of the following manners: a defined Medium Access Control Protocol Data Unit (MAC PDU) command; or a newly added Medium Access Control Control Element (MAC CE) for carrying the second information.

In the above embodiments, multiple methods for carrying the second information are provided to be applicable to receiving the second information in various scenarios, thereby improving universality.

In conjunction with some embodiments of the first aspect, the second information includes at least one of the following parameters: a TA of the candidate cell; a cell identity of the candidate cell; a logical identity of the candidate cell; or a Timing Advance Group (TAG) identity of the candidate cell.

In the above embodiments, multiple possible parameters included in the second information are provided to accurately indicate the TA of the candidate cell. For example, in the cell handover scenario, the random access efficiency can be improved.

In conjunction with some embodiments of the first aspect, the type 1 common search space set of the physical downlink control channel and its associated CORESET are resources of the first network device or the second network device.

In the above embodiments, the second time window can be determined based on the type 1 common search space set of the physical downlink control channel corresponding to the serving cell or the candidate cell and its associated CORESET, and the second information can be received, improving universality.

In conjunction with some embodiments of the first aspect, receiving, within the first time window, the second information sent by the second network device includes: receiving, within the first time window, a Physical Downlink Control Channel (PDCCH) for scheduling a Physical Downlink Shared Channel (PDSCH) resource, wherein the PDSCH resource is configured to send the second information.

In the above embodiments, the accurate second information can be received based on the PDSCH scheduled by the PDCCH within the first time window. For example, in the cell handover scenario, the cell handover delay can be reduced and the cell handover efficiency can be improved.

According to a second aspect of embodiments of the present disclosure, there is provided a random access method, which is performed by a second network device and includes: sending second information, wherein the second information is configured to indicate a Timing Advance (TA), the TA is determined by a first network device based on first information, the TA is a TA corresponding to the first network device, the second network device is a network device of a serving cell, and the first network device is a network device of a candidate cell.

In the above embodiments, the TA of the candidate cell is sent to the terminal via the serving cell, so that the terminal can receive the TA corresponding to the candidate cell via the serving cell. For example, in a cell handover scenario, the cell handover delay can be reduced and the cell handover efficiency can be improved.

In conjunction with some embodiments of the second aspect, sending the second information includes: sending the second information within a first time window, wherein the first time window is determined based on a first time domain position and a first duration.

In conjunction with some embodiments of the second aspect, the first duration is determined by at least one of the following manners: the first duration is determined based on a first predefined rule, wherein the first duration is predefined by the first predefined rule; the first duration is determined based on a network device configuration; or the first duration is determined based on a second duration and a third duration, wherein the second duration is a duration configured by the network device, and the third duration is configured by the network device or determined based on the first predefined rule.

In conjunction with some embodiments of the second aspect, the second information includes information for indicating a system frame number.

In conjunction with some embodiments of the second aspect, the first time domain position is determined by at least one of the following manners: the first time domain position is determined based on a second predefined rule, wherein the first time domain position is predefined by the second predefined rule; the first time domain position is determined based on a network device configuration; or the first time domain position is determined based on a second time domain position and a fourth duration, wherein the second time domain position is an end position of a random access channel occasion (RO) for sending the first information, and the fourth duration is configured to indicate a time domain offset between the first time domain position and the second time domain position.

In conjunction with some embodiments of the second aspect, the first time domain position is a first Orthogonal Frequency Division Multiplexing (OFDM) symbol that is offset by the fourth duration from the second time domain position.

In conjunction with some embodiments of the second aspect, the first time domain position is a first OFDM symbol of a Control Resource Set (CORESET) corresponding to a type 1 common search space set of a physical downlink control channel sent by the first network device or the second network device after a position that is offset by the fourth duration from the second time domain position.

In conjunction with some embodiments of the second aspect, the method further includes: sending third information, wherein the third information is configured to indicate to the terminal to send the first information to the first network device.

In conjunction with some embodiments of the second aspect, the third information is further configured to indicate to the terminal to send, based on a target RO, the first information to the first network device, wherein the target RO is determined by at least one of the following manners: the target RO is determined based on fourth information, wherein the third information includes the fourth information, and the fourth information is configured to indicate the target RO; the target RO is determined based on the fourth information and fifth information, wherein the third information includes the fourth information and the fifth information, wherein the fourth information is configured to indicate a plurality of ROs, and the fifth information is configured to indicate one of the plurality of ROs as the target RO; or the target RO is determined based on the fourth information and a third predefined rule, wherein the third information includes the fourth information, the fourth information is configured to indicate the plurality of ROs, and the third predefined rule predefines selection of one of the plurality of ROs as the target RO.

In conjunction with some embodiments of the second aspect, the target RO is determined based on the fourth information and the third predefined rule, and the method further includes: receiving sixth information, wherein the sixth information is configured to indicate a RO selected by the terminal.

In conjunction with some embodiments of the second aspect, the method further includes: receiving seventh information, wherein the seventh information is configured to indicate a downlink time difference between the first network device and the second network device.

In conjunction with some embodiments of the second aspect, the second information is carried in at least one of the following manners: a defined Medium Access Control Protocol Data Unit (MAC PDU) command; or a newly added Medium Access Control Control Element (MAC CE) for carrying the second information.

In conjunction with some embodiments of the second aspect, the second information includes at least one of the following parameters: a TA of the candidate cell; a cell identity of the candidate cell; a logical identity of the candidate cell; or a Timing Advance Group (TAG) identity of the candidate cell.

In conjunction with some embodiments of the second aspect, the type 1 common search space set of the physical downlink control channel and its associated CORESET are resources of the first network device or the second network device.

In conjunction with some embodiments of the second aspect, sending the second information within the first time window includes: sending, within the first time window, a Physical Downlink Control Channel (PDCCH) for scheduling a Physical Downlink Shared Channel (PDSCH) resource, wherein the PDSCH resource is configure to send the second information.

According to a third aspect of embodiments of the present disclosure, there is provided a random access method, which includes: sending, by a terminal, first information to a first network device, wherein the first information is configured to determine a Timing Advance (TA), the TA is a TA corresponding to the first network device, and the first network device is a network device of a candidate cell; and sending, by a second network device, second information to the terminal, wherein the second information is configured to indicate the TA, and the second network device is a network device of a serving cell; and receiving, by the terminal, the second information sent by the second network device.

In the above embodiments, the TA of the candidate cell is sent to the terminal via the serving cell, so that the terminal can receive the TA corresponding to the candidate cell via the serving cell. For example, in a cell handover scenario, the cell handover delay can be reduced and the cell handover efficiency can be improved.

According to a fourth aspect of embodiments of the present disclosure, there is provided a terminal, including: a transceiving module; the transceiving module is configured to send first information to a first network device, wherein the first information is configured to determine a Timing Advance (TA), the TA is a TA corresponding to the first network device, and the first network device is a network device of a candidate cell; and the transceiving module is further configured to receive second information sent by a second network device, wherein the second information is configured to indicate the TA, and the second network device is a network device of a serving cell.

In the above embodiments, the TA of the candidate cell is sent to the terminal via the serving cell, so that the terminal can receive the TA corresponding to the candidate cell via the serving cell. For example, in a cell handover scenario, the cell handover delay can be reduced and the cell handover efficiency can be improved.

According to a fifth aspect of embodiments of the present disclosure, there is provided a network device, including: a transceiving module; the transceiving module is configured to send second information, wherein the second information is configured to indicate a Timing Advance (TA), the TA is determined by a first network device based on first information, the TA is a TA corresponding to the first network device, the second network device is a network device of a serving cell, and the first network device is a network device of a candidate cell.

In the above embodiments, the TA of the candidate cell is sent to the terminal via the serving cell, so that the terminal can receive the TA corresponding to the candidate cell via the serving cell. For example, in a cell handover scenario, the cell handover delay can be reduced and the cell handover efficiency can be improved.

According to a sixth aspect of embodiments of the present disclosure, there is provided a terminal, including: one or more processors; wherein the terminal is configured to perform the first aspect and any one of the random access methods in the first aspect.

In the above embodiments, the TA of the candidate cell is sent to the terminal via the serving cell, so that the terminal can receive the TA corresponding to the candidate cell via the serving cell. For example, in a cell handover scenario, the cell handover delay can be reduced and the cell handover efficiency can be improved.

According to a seventh aspect of embodiments of the present disclosure, there is provided a network device, including: one or more processors; wherein the network device is configured to perform the second aspect and any one of the random access methods in the second aspect.

In the above embodiments, the TA of the candidate cell is sent to the terminal via the serving cell, so that the terminal can receive the TA corresponding to the candidate cell via the serving cell. For example, in a cell handover scenario, the cell handover delay can be reduced and the cell handover efficiency can be improved.

According to an eighth aspect of embodiments of the present disclosure, there is provided a communication system, including a terminal and a network device, wherein the terminal is configured to implement the first aspect and any one of the random access methods in the first aspect, and the network device is configured to implement the second aspect and any one of the random access methods in the second aspect.

In the above embodiments, the TA of the candidate cell is sent to the terminal via the serving cell, so that the terminal can receive the TA corresponding to the candidate cell via the serving cell. For example, in a cell handover scenario, the cell handover delay can be reduced and the cell handover efficiency can be improved.

According to a ninth aspect of embodiments of the present disclosure, there is provided a storage medium having instructions stored, wherein the instructions, when run on a communication device, cause the communication device to perform he first aspect and any one of the random access methods in the first aspect or the second aspect and any one of the random access methods in the second aspect.

In the above embodiments, the TA of the candidate cell is sent to the terminal via the serving cell, so that the terminal can receive the TA corresponding to the candidate cell via the serving cell. For example, in a cell handover scenario, the cell handover delay can be reduced and the cell handover efficiency can be improved.

According to a tenth aspect of embodiments of the present disclosure, the embodiments of the present disclosure provide a program product that, when executed by a communication device, causes the communication device to perform the method as described in an implementation of the first or second aspect.

According to an eleventh aspect of embodiments of the present disclosure, the embodiments of the present disclosure provide a computer program that, when run on a computer, causes the computer to perform the method as described in an implementation of the first or second aspect.

According to a twelfth aspect of embodiments of the present disclosure, the embodiments of the present disclosure provide a chip or chip system. The chip or chip system includes a processing circuitry configured to perform the method as described in an implementation of the first or second aspect.

It can be understood that the terminals, access network devices, network elements, core network devices, communication systems, storage media, program products, computer programs, chips, or chip systems involved in various embodiments of the present disclosure are all used to execute the methods proposed in the embodiments of the present disclosure. Therefore, the beneficial effects they may achieve may be referred to in the corresponding methods, and will not be elaborated upon here.

The embodiments of the present disclosure provide a random access method and apparatus, a device, and a storage medium. In some embodiments, terms such as random access method, information processing method and communication method may be used interchangeably, terms such as random access apparatus, information processing apparatus and communication apparatus may be used interchangeably, and terms like information processing system and communication system may be used interchangeably.

The embodiments of the present disclosure are not exhaustive, but merely illustrate a part of the embodiments and do not constitute specific limitations on the scope of protection of the present disclosure. In the absence of contradiction, each step in a certain embodiment may be implemented as an independent embodiment, and the steps may be arbitrarily combined. For example, a solution with a part of steps removed from a certain embodiment may also be implemented as an independent embodiment, and the order of the steps in a certain embodiment may be arbitrarily exchanged. In addition, the implementations in a certain embodiment may be arbitrarily combined. Additionally, the various embodiments may be arbitrarily combined. For example, a part of or all of the steps of different embodiments may be arbitrarily combined, and a certain embodiment may be arbitrarily combined with the implementations of other embodiments.

In various embodiments of the present disclosure, unless otherwise specified or logically conflicting, the terms and/or descriptions among the embodiments are consistent and may be mutually referenced. Technical features in different embodiments may be combined based on their inherent logical relationships to form new embodiments.

The terms used in the embodiments of the present disclosure are for the purpose of describing specific embodiments only, and are not intended to limit the present disclosure.

In the embodiments of the present disclosure, unless otherwise specified, elements expressed in singular forms, such as "a", "an", "the", "above", "said", "aforementioned", "this", etc. may refer to "one and only one", or may refer to "one or more" or "at least one" and the like. For example, when articles such as "a", "an", "the" in English are used in translation, the nouns following these articles may be understood as singular expression forms or plural expression forms.

In the embodiments of the present disclosure, "a plurality of" refers to two or more.

In some embodiments, terms such as "at least one of", "one or more", "a plurality of", and "multiple" may be interchangeable.

In some embodiments, the reciting manners such as "at least one of A and B", "A and/or B", "in one situation A, in another situation B", "in response to one situation A, in response to another situation B" may include the following technical solutions depending on the situation: in some embodiments, A (executing A independently of B); in some embodiments, B (executing B independently of A); in some embodiments, selectively executing A or B (executing A and B selectively); and in some embodiments, A and B (executing both A and B). When there are more branches such as A, B, C, etc., the solution is similar to the above.

In some embodiments, the reciting manners such as "A or B" may include the following technical solutions depending on the situation: in some embodiments, A (executing A independently of B); in some embodiments, B (executing B independently of A); in some embodiments, selectively executing A or B (executing A and B are selectively). When there are more branches such as A, B, C, etc., the solution is similar to the above.

The prefix words such as "first" and "second" in the embodiments of the present disclosure are only used to distinguish different described objects, and do not limit the position, order, priority, number, or content, etc. of the described objects. The description of the described objects may refer to the description in the claims or the context of the embodiments, and should not constitute unnecessary limitations due to the use of the prefix words. For example, if the described object is a "field", then the ordinal number before the "field" in the "first field" and the "second field" does not limit the position or order between the "fields", and "first" and "second" do not limit whether the "fields" they modify are in the same message, nor do they limit the sequential order of the "first field" and the "second field". For another example, if the described object is a "level", then the ordinal number before the "level" in the "first level" and the "second level" does not limit the priority between the "levels". For another example, the number of the described objects is not limited by the ordinal number, and may be one or more. Taking the "first device" as an example, the number of "devices" may be one or more. Furthermore, the objects modified by different prefix words may be the same or different. For example, if the described object is a "device", then the "first device" and the "second device" may be the same device or different devices, and may be of the same type or different types. For another example, if the described object is "information", then the "first information" and the "second information" may be the same information or different information, and may be information of the same content or information of different contents.

In some embodiments, "comprising A", "including A", "used for indicating A", and "carrying A" may be interpreted as directly carrying A, or may be interpreted as indirectly indicating A.

In some embodiments, terms such as "in response to...", "in response to determining...", "in the case of...", "when...", "at the time of...", "if...", "assuming...", etc. may be interchangeable.

In some embodiments, terms such as "greater than", "greater than or equal to", "not less than", "more than", "more than or equal to", "not smaller than", "higher than", "higher than or equal to", "not lower than", "above", etc. may be interchangeable. Terms such as "less than", "less than or equal to", "not greater than", "smaller than" "smaller than or equal to", "not more than", "lower than", "lower than or equal to", "not higher than", "below", etc. may be interchangeable.

In some embodiments, apparatuses and devices may be interpreted as physical or virtual, and their names are not limited to the names recited in the embodiments, which can also be understood as "equipment", "device", "circuit", "network element", "node", "function", "unit", "section", "system", "network", "chip", "chip system", "entity", "subject", etc. in some cases.

In some embodiments, "network" may be interpreted as a device (e.g., an access network device, a core network device, etc.) included in the network.

In some embodiments, "access network device (AN device)" may also be called "radio access network device (RAN device)", "base station (BS)", "radio base station", "fixed station", and in some embodiments, it may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc.

In some embodiments, "terminal" or "terminal device" may be called "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc.

In some embodiments, obtaining data, information, etc. may comply with the laws and regulations of the country where it is located.

In some embodiments, data, information, etc. may be obtained after the user consent is obtained.

In addition, each element, each row, or each column in the table of the embodiments of the present disclosure may be implemented as an independent embodiment, and the combination of any element, any row, or any column may also be implemented as an independent embodiment.

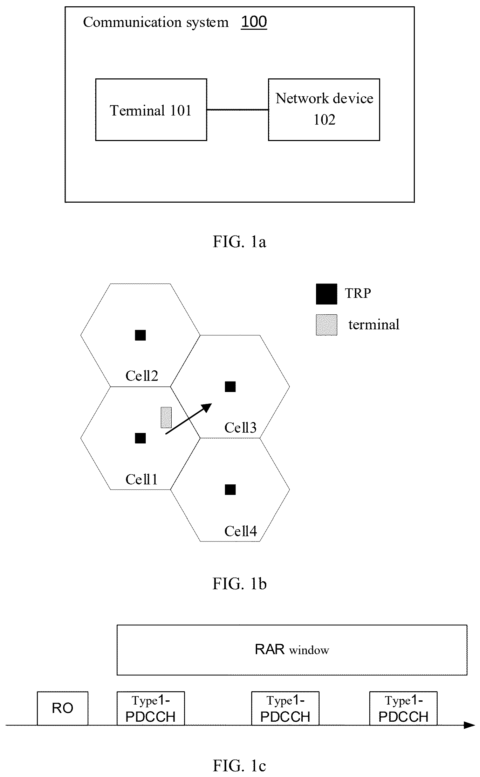

FIG. 1a shows a schematic diagram of an architecture of a communication system according to an embodiment of the present disclosure.

As shown in FIG. 1a, the communication system 100 includes a terminal 101 and a network device 102.

In some embodiments, for example, the terminal 101 includes, but is not limited to, at least one of: a mobile phone, a wearable device, an IoT device, a vehicle with communication functions, a smart vehicle, a pad, a computer with wireless transceiving functions, a virtual reality (VR) terminal device, an augmented reality (AR) terminal device, a wireless terminal device in industrial control, a wireless terminal device in self-driving applications, a wireless terminal device in remote medical surgery, a wireless terminal device in the smart grid, a wireless terminal device in transportation safety, a wireless terminal device in the smart city, or a wireless terminal device in smart homes.

In some embodiments, the network device 102 may include at least one of an access network device and a core network device.

In some embodiments, the access network device is, for example, a node or a device that connects the terminal to a wireless network. The access network device may include, but is not limited to, at least one of: an evolved node B (eNB), a next generation eNB (ng-eNB), a next generation node B (gNB), a node B (NB), a home node B (HNB), a home evolved node B (HeNB), a wireless backhaul device, a radio network controller (RNC), a base station controller (BSC), a base transceiver station (BTS), a base band unit (BBU), and a mobile switching center in a 5G communication system, a base station, an open RAN, a cloud RAN in a 6G communication system, a base station in other communication systems, and an access node in a WiFi system.

In some embodiments, the technical solution in the present disclosure may be applicable to an Open RAN architecture. In this case, the interfaces between or within the access network devices involved in the embodiments of the present disclosure may become internal interfaces of the Open RAN. The procedures and information exchange between these internal interfaces may be implemented through software or programs.

In some embodiments, the access network device may be composed of a central unit (CU) and a distributed unit (DU). The CU may also be referred to as a control unit. The CU-DU structure may be used to separate the protocol layers of the access network device, with some protocol layer functions arranged in the CU for centra control, and a part of or all of the remaining protocol layer functions distributed in the DU, where the DU is centrally controlled by the CU, but is not limited to this.

In some embodiments, the core network device may be a device, including one or more network elements, or the core network device may be a plurality of devices or device groups, each including all or part of the one or more network elements. The network element may be virtual or physical. For example, the core network includes at least one of: an evolved packet core (EPC), a 5G core network (5GCN), and a next generation core (NGC).

It should be understood that the communication system described in the embodiments of the present disclosure is for a clearer explanation of the technical solution of the embodiments of the present disclosure, but does not constitute a limitation on the technical solution proposed in the embodiments of the present disclosure. Those ordinary skilled in the art know that with the evolution of the system architecture and the emergence of new service scenarios, the technical solution proposed in the embodiments of the present disclosure is also applicable to similar technical problems.

The embodiments of the present disclosure described below may be applied to the communication system 100 shown in FIG. 1a, or a part of the subjects in the communication system 100, but are not limited thereto. The subjects shown in FIG. 1a are illustrative only. The communication system may include all of or a part of the subjects shown in FIG. 1a, or may include subjects other than those shown in FIG. 1a. The number and form of each subject are arbitrary, and each subject may be physical or virtual. The connection relationships between the subjects are illustrative. The subjects may not be connected to each other or may be connected to each other. The connection may be in any way, either direct or indirect, wired or wireless.

The embodiments of the present disclosure may be applied to the long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN) network, device-to-device (D2D) system, machine-to-machine (M2M) system, Internet of Things (IoT) system, vehicle-to-everything (V2X) system, system utilizing other communication methods, and next generation system extended based on these, etc. Furthermore, a plurality of systems may be combined (for example, a combination of the LTE or the LTE-A with 5G) for application.

In embodiments of the present disclosure, a L1/L2 based inter-cell mobility scenario is proposed in release (R)18. FIG. 1b shows the LTM scenario. As can be seen from FIG. 1b, a terminal moves between cells, for example, from cell 1 to cell 3 as indicated by the arrow. It can be understood that in the corresponding cell, the terminal can communicate with a network device of that cell through the cell's TRP. In the scenario shown in FIG. 1b, the network device can maintain multiple candidate cells for the terminal. As the terminal moves, when the cell handover is required, a cell can be selected from the multiple candidate cells as a target cell, and the terminal can then hand over to that target cell.

In some embodiments, to reduce the handover delay and complete the handover as quickly as possible, unlike traditional cell handover, in this example, a Radio Resource Control (RRC) parameter for each candidate cell can be preconfigured to the terminal. The network device can determine whether to perform the cell handover based on a measurement result of the terminal performing the L1 measurement. When the network device determines that the cell handover is required, it can trigger, through the dynamic handover signaling, the terminal to hand over to the target cell.

It can be understood that the terminal needs to perform the L1 measurement on each candidate cell and report the measurement result to a network device of a source cell, so that the network device of the source cell determines, based on the measurement result, whether the terminal needs to perform the cell handover. The source cell can also be called the serving cell.

In some embodiments, the terminal also needs to consider pre-measuring a TA value from the terminal to each cell. In some cases, at least a measurement manner based on a Physical Downlink Control Channel (PDCCH) order Random Access Channel (RACH) can be supported. During the measurement of the TA of the candidate cell through the random access procedure, after the terminal sends a preamble sequence, it can receive a Random Access Response (RAR) sent by the network device. For the random access procedure of measuring the candidate cell, the RAR of the candidate cell is not sent by the candidate cell that receives the preamble sequence, but may be sent by the serving cell.

Therefore, in this scheme where the terminal sends the preamble sequence to a certain cell and another cell feeds back the RAR, it is currently unclear how the terminal receives the RAR sent by the serving cell.

In some embodiments, FIG. 1c shows a schematic diagram of receiving a RAR during a RACH procedure. After the terminal sends message (MSG) 1 to a candidate cell on a random access channel occasion (RO), it receives a type 1 PDCCH within a RAR window, where MSG1 includes a preamble sequence. In some examples, MSG1 can be the preamble sequence. The type 1 PDCCH can schedule a Physical Downlink Shared Channel (PDSCH) for the terminal. The candidate cell that has received MSG1 will send the RAR to the terminal in this PDSCH. The starting position of the RAR can begin with a first symbol of a Control Resource Set (CORESET) of the earliest type 1-PDCCH Common Search Space (CSS) set after the RO. A length of the RAR window can be configured by the network device, which can be, in some examples, 10 milliseconds (ms).

In some embodiments, RO may also be referred to as the random access occasion, the random access time-frequency resource, etc., and the present disclosure does not limit the name of RO.

However, for the PDCCH order RACH for the TA measurement of the candidate cell, the RAR is sent to the terminal through the serving cell, but the RAR window of the serving cell does not match that of the terminal. For example, the serving cell does not know a RO position of the candidate cell, so the serving cell cannot determine the position of the terminal side's RAR window. In addition, the candidate cell receives MSG1, and the serving cell needs to interact with the candidate cell before sending the RAR. This interaction takes time. By the time the serving cell has finished interacting with the candidate cell and is ready to send the RAR, the RAR window may have already closed for the terminal.

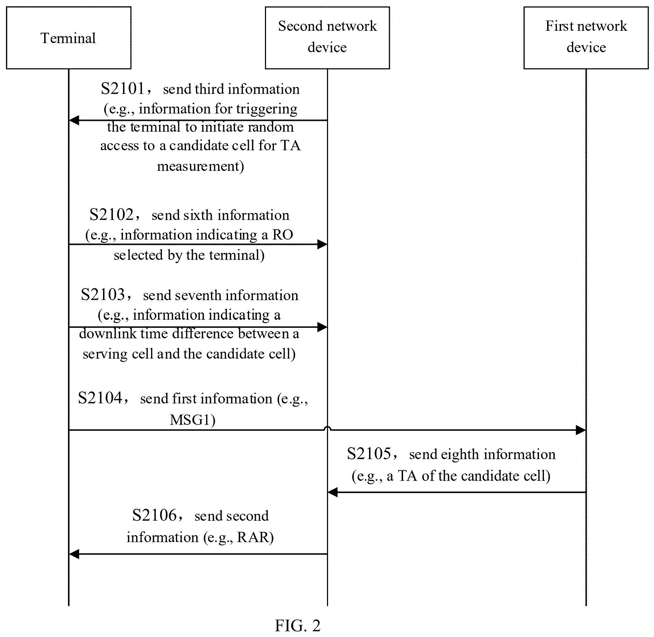

FIG. 2 shows a schematic interactive diagram of a random access method according to an embodiment of the present disclosure. As shown in FIG. 2, the embodiment of the present disclosure relates to the random access method for a communication system 100, and the method includes steps S2101 to S2106.

In the step S2101, a second network device sends third information to a terminal 101.

In some embodiments, the second network device sends the third information to the terminal 101.

In some embodiments, the terminal 101 receives the third information sent by the second network device.

In some embodiments, "obtain", "acquire", "get", "receive", "transmit" "transmit bidirectionally", and "send and/or receive", etc. may be interchangeable, and may be interpreted as various meanings, such as receiving from another subject, obtaining from a protocol, obtaining from an upper layer, obtaining through self-processing, and autonomous implementation, etc.

In some embodiments, terms such as "send", "emit", "report", "issue", "transmit", "transmit bidirectionally", "send and/or receive" may be interchangeable.

In some embodiments, the second network device is a network device 102, where the network device 102 can be an access network device or a core network device.

In some embodiments, the second network device may be a network device corresponding to a serving cell.

In some embodiments, the serving cell can be considered as a cell that has set up a connection with the terminal 101 and provides services to the terminal 101. The serving cell can be a cell where the terminal 101 camps.

In some embodiments, the third information is used to indicate to the terminal 101 to send first information to a first network device.

In some embodiments, the third information is used to trigger the terminal to initiate random access to the candidate cell for TA measurement.

In some embodiments, the terms such as "component carrier (CC)", "cell", "frequency carrier" and "carrier frequency" can be used interchangeably.

In some embodiments, the third information may be referred to as "indication information", "random access trigger information", "random access indication information", etc., and the present disclosure does not limit the name of the third information.

In some embodiments, the third information may include fourth information.

In some embodiments, the fourth information may indicate a synchronization signal/physical broadcast channel block (SSB) identifier. The third information may also indicate a physical random access channel (PRACH) mask identifier.

In some embodiments, the identifier can be an identity (ID) or an index.

In some embodiments, the terms such as "synchronization signal (SS)", "synchronization signal block (SSB)", "reference signal (RS)", "pilot" and "pilot signal" can be used interchangeably.

In some embodiments, the fourth information may indicate the SSB index. The fourth information may also indicate the PRACH mask index.

In some embodiments, the fourth information may indicate a target RO, so that the terminal sends the first information to the first network device based on the target RO.

In some embodiments, the terms such as "target", "certain", "preseted", "preset", "set", "indicated", "a", "any" and "first" can be used interchangeably. "Certain A", "preseted A", "preset A", "set A", "indicated A", "a A", "any A" and "first A" can be interpreted as the pre-defined A in a protocol or the like, or as A obtained through setting, configuration, or indication, or as specific A, certain A, any A, or first A, but are not limited thereto.

In some embodiments, the fourth information is used to determine a unique RO. For example, the SSB index and the PRACH mask index are used to determine the unique RO. This RO can be used as the target RO. The target RO is a time-frequency resource for the terminal to send the first information to the first network device.

In some embodiments, the fourth information is used to determine a plurality of ROs. For example, the SSB index and the PRACH mask index can be used to determine a plurality of ROs. The terminal selects one RO from the plurality of ROs as the target RO.

In some embodiments, the fourth information is used to determine the plurality of ROs. The terminal can determine one RO as the target RO from the plurality of ROs based on its specific implementation. Alternatively, the specific implementation of the terminal can be configured according to actual circumstances, which is not limited by the present disclosure.

For example, the terminal, based on its own implementation, determines a RO that is closest to a time when the third information was received. For example, a RO that is closest in time to the current time when the third information was received is determined.

In some embodiments, the terminal may determine the target RO based on the fourth information and a third predefined rule. The third predefined rule predefines which RO to select from the plurality of ROs.

For example, the terminal determines the plurality of ROs based on the fourth information and selects one RO from the plurality of ROs according to the third predefined rule. This RO can be used as the target RO.

In some embodiments, the fourth information is used to determine the plurality of ROs. In this case, the third information may further include fifth information. The fifth information is used to indicate one of the plurality of ROs.

For example, the terminal can determine the plurality of ROs based on the fourth information, and determine one RO as the target RO from the plurality of ROs based on the fifth information. In this case, it can also be considered that the serving cell indicates the unique RO in the third information, and the adopted method is to further clarify a fixed RO from the plurality of ROs.

In some embodiments, the names of information, etc., are not limited to those described in the embodiments. Terms such as "information", "message", "signal", "signaling", "report", "configuration", "indication", "instruction", "command", "channel", "parameter", "domain", "field", "symbol", "codebook", "codeword", "codepoint", "bit", "data", "program", "chip" and other similar terms may be used interchangeably.

In some embodiments, the network device sending the information to the terminal can be referred to as downlink communication. The network device can be the first network device or the second network device.

In some embodiments, the first network device and the second network device may be different network devices for performing cell handover between different cells under the same gNB.

In some embodiments, the terms such as "DL", "downlink", and "physical downlink" can be used interchangeably.

In some embodiments, the solutions involved in the various embodiments of the present disclosure can be used in a cell handover scenario, for example, cell handover within the same centralized unit (CU).

In the step S2102, the terminal 101 sends sixth information to the second network device.

In some embodiments, the terminal 101 receives the sixth information sent by the second network device.

In some embodiments, the second network device sends the sixth information to the terminal 101.

In some embodiments, the sixth information is used to indicate the target RO selected by the terminal.

For example, the terminal selects, based on its own implementation, the target RO from the plurality of ROs indicated by the fourth information.

In some embodiments, when the target RO is indicated by the fourth and fifth information, considering that the fourth and fifth information are both included in the third information sent by the second network device, it can be assumed that the second network device knows the target RO in this case. Therefore, in this case, the step S2102 can be skipped directly.

In some embodiments, the terminal sending the information to the network device can be referred to as uplink communication. The network device can be the first network device or the second network device.

In some embodiments, the terms such as "UL", "uplink", and "physical uplink" can be used interchangeably.

In the step S2103, the terminal 101 sends seventh information to the second network device.

In some embodiments, the terminal 101 receives the seventh information sent by the second network device.

In some embodiments, the second network device sends the seventh information to the terminal 101.

In some embodiments, the seventh information is used to indicate a downlink time difference between the first network device and the second network device.

For example, the terminal can determine the downlink time difference between the first network device and the second network device based on the downlink timing of the serving cell and the downlink timing of the candidate cell. The terminal reports this time difference to the second network device.

It can be understood that the purpose of the terminal sending the downlink time difference between the first and second network devices to the second network device is to enable the second network device to determine a time domain position of the target RO based on this time difference, which facilitates the subsequent sending of second information by the second network device and the receiving of the second information by the terminal.

Alternatively, in some embodiments, if the downlink time between the first network device and the second network device is synchronized, or the downlink time difference is 0, the step S2103 can be skipped.

In some embodiments, the second network device can determine the downlink time difference between the first and second network devices based on the interaction with the first network device by itself. In this case, the step S2103 can be skipped, and the subsequent step S2104 can be executed directly.

In some embodiments, the terms such as "moment", "point in time", "time" and "time location" can be used interchangeably, and the terms such as "duration", "period", "time window", "window" and "time" can be used interchangeably.

In some embodiments, the order of the steps S2103 and S2102 is not strictly defined. The step S2102 may be executed first, followed by the step S2103; the step S2103 may be executed first, followed by the step S2102; or the steps S2102 and S2103 may be executed simultaneously, which is not limited by the present disclosure.

In some embodiments, the order of steps S2103 and S2101 is not strictly defined. The step S2101 may be executed first, followed by the step S2103; or the step S2103 may be executed first, followed by the step S2101; or the steps S2101 and S2103 may be executed simultaneously, which is not limited by the present disclosure.

In some embodiments, the step S2103 is executed first, followed by the step S2101.

Alternatively, if the steps S2102 and S2103 are executed simultaneously, then the steps S2101 and S2103 cannot be executed simultaneously; and if the steps S2101 and S2103 are executed simultaneously, then the steps S2102 and S2103 cannot be executed simultaneously. In other words, the steps S2101 and S2102 cannot be executed simultaneously.

In the step S2104, the terminal 101 sends first information to the first network device.

In some embodiments, the terminal 101 receives the first information sent by the first network device.

In some embodiments, the first network device sends the first information to the terminal 101.

In some embodiments, the first network device is the network device 102. The network device 102 can be an access network device or a core network device. The access network device can be a base station, a transmission and receiving point (TRP), etc. Alternatively, for the first network device, the terminal has not yet randomly accessed it. Therefore, it should be understood that the access network device involved in the present disclosure is not necessarily the network device with which the terminal has successfully accessed.

In some embodiments, the first network device may be the network device corresponding to the candidate cell.

It can be understood that the first network device and the second network device are different network devices. Alternatively, it can be assumed that the first network device and the second network device correspond to different cells.

In some embodiments, the candidate cell is a target cell that the terminal is preparing to access randomly.

In some embodiments, the first information is used by the first network device to perform TA measurement.

In some embodiments, the first information may be MSG1.

In some embodiments, the first information may be a preamble. The first information may also be referred to as a preamble sequence.

In some embodiments, the first information may be referred to as "message 1", "information 1", "preamble", "preamble sequence", "random access message 1", "MSG1", "pseudo random sequence", etc. The present disclosure does not limit the name of the first information.

In the step S2105, the first network device sends eighth information to the second network device.

In some embodiments, the second network device receives the eighth information sent by the first network device.

In some embodiments, the first network device sends the eighth information to the second network device.

In some embodiments, the eighth information is used to indicate the TA value measured by the first network device.

In some embodiments, after receiving the first information sent by the terminal 101, the first network device sends the eighth information for indicating the TA to the second network device, so that the second network device can indicate the TA value measured by the first network device to the terminal.

For example, after receiving the preamble sequence sent by terminal 101, the first network device measures the TA corresponding to the first network device. The first network device sends the eighth information for indicating the TA to the second network device, so that the second network device can indicate, based on the eighth information, to the terminal the TA value measured by the first network device. In some embodiments, the eighth information may include a Random Access Radio Network Temporary Identity (RA-RNTI). The eighth information may further include a Cell Radio Network Temporary Identity (C-RNTI). Further, whether the eighth information includes the RA-RNTI and/or the C-RNTI is related to whether the terminal 101 sends the MSG3 to the first network device according to a normal procedure.

In the step S2106, the second network device sends second information to the terminal 101.

In some embodiments, the second network device sends the second information to the terminal 101.

In some embodiments, the terminal 101 receives the second information sent by the second network device.

In some embodiments, the second information is used to indicate the TA corresponding to the first network device.

For example, the second information includes the TA value measured by the first network device.

In some embodiments, the second information may be referred to as the RAR.

In some embodiments, the second information may also be referred to as "random access response information", "random access response message", "candidate cell RAR", "candidate cell random access response information", etc. The present disclosure does not limit the name of the second information.

In some embodiments, the second information can be carried by a defined Medium Access Control Protocol Data Unit (MAC PDU) command.

For example, a new MAC PDU is defined to carry the second information.

In some embodiments, the second information may be carried by a newly added Medium Access Control Control Element (MAC CE).

For example, a dedicated MAC CE for carrying the second information is newly added, and the second information is carried by the newly added MAC CE.

In some embodiments, the second information may be carried either by the MAC PDU or the MAC CE.

In some embodiments, the second information may include the TA of the candidate cell.

In some embodiments, the second information may include an identity of the candidate cell.

For example, the second information includes a candidate cell ID.

In some embodiments, the second information may include a logical identity of the candidate cell.

For example, the second information includes the candidate cell logical ID. The logical ID can be an RRC configure parameter ID.

In some embodiments, the second information may include a Timing Advance Group (TAG) identity of the candidate cell.

For example, the second information includes a TAG ID of the candidate cell.

In some embodiments, the second information may further include at least one of: the TA of the candidate cell, the identity of the candidate cell, the logical identity of the candidate cell, or the Timing Advance Group (TAG) identity of the candidate cell.

In some embodiments, the second network device may send, based on the first time window, a Type 1 PDCCH for scheduling the PDSCH that transmits the second information.

In some embodiments, the terminal may receive, within the first time window, the Type 1 PDCCH for scheduling the PDSCH that transmits the second information.

For example, the terminal receives the type-1 PDCCH within the first time window. This type-1 PDCCH is used to schedule the PDSCH resource, and the second network device can send the second information through this PDSCH resource. The terminal 101 can receive the second information on this PDSCH resource.

Alternatively, the PDSCH can be located within or outside the first time window, which is not limited by the present disclosure.

It should be noted that in various embodiments of the present disclosure, the terminal receives the second information on the PDSCH resource scheduled by the type-1 PDCCH within the first time window, which can also be referred to as receiving the second information within the first time window. That is, the above different descriptions can be used interchangeably, which is not limited by the present disclosure.

In some embodiments, the terms such as "Physical Downlink Shared Channel (PDSCH)" and "DL data" can be used interchangeably.

In some embodiments, the first time window can be considered as a time window in which the terminal 101 receives the Type 1 PDCCH for scheduling the PDSCH that transmits the second information.

In some embodiments, the first time window can also be considered as a time window in which the second network device sends the second information.

In some embodiments, the first time window may be referred to as a RAR time window or a RAR window. The present disclosure does not limit the name of the first time window.

In some embodiments, the first time window can be determined through configuration information of the serving cell.

For example, the first time window is determined through the RACH configuration (config) of the serving cell.

In some embodiments, the first time window can be considered as the RAR window corresponding to the second network device. Compared to the RAR window corresponding to the candidate cell, the starting position of the RAR window corresponding to the second network device can be later than the starting position of the RAR window corresponding to the candidate cell. For another example, the end position of the RAR window corresponding to the second network device can be later than the end position of the RAR window corresponding to the candidate cell. The duration of the RAR window corresponding to the second network device can be greater than the duration of the RAR window corresponding to the candidate cell.

In some embodiments, the first time window includes a first duration. The first duration is a length of the duration of the first time window.

In some embodiments, the first duration can be determined based on a first predefined rule. The first predefined rule predefines the first duration.

For example, the first predefined rule predefines the duration of the RAR window, so that the terminal can correctly receive the second information within the first time window.

In some embodiments, the first duration may be based on the network device configuration.

For example, the first duration is determined based on the configuration of the second network device.

In some embodiments, the first duration can be determined based on a second duration and a third duration. The second duration is a duration configured by the network device, and the third duration is configured by the network device or determined based on the first predefined rule.

For example, the second network device can configure the second duration. This second duration can be considered as the duration of the RAR window already existing in the related arts. It is understood that the second duration does not account for the time incurred by the interaction between the first network device and the second network device. Therefore, there is a case where the terminal cannot receive the second information based on the second duration. For example, when the second network device sends the second information, the RAR window corresponding to the second duration may have already ended.

For another example, the third duration can be configured by the second network device.

For yet another example, the third duration can be predefined by the first predefined rule.

In some embodiments, the second duration can be up to 10 ms.

In some embodiments, the third duration may be greater than or equal to an interaction time between the first network device and the second network device.

For example, the third duration can be denoted as L.

In some embodiments, the first duration may be equal to the sum of the second duration and L.

In some embodiments, considering that the first duration is equal to the sum of the second duration and L, the first duration may exceed 10ms. That is, if the terminal receives the second information after the first time window has elapsed for 10ms, it may cause the RAR to conflict with the RARs of other frames. In this case, the second information may include information for indicating a System Frame Number (SFN).

For example, if a RAR window 1 for the terminal to receive the second information corresponds to a first frame, then the starting position of the RAR window 1 can be considered to be within the first frame. It is assumed that a frame length is 10ms, and the first duration is the sum of the second duration and L, and greater than 10ms, then the RAR window 1 will span the first frame and its adjacent second frame. However, for the second frame, it also has its corresponding RAR window, such as a RAR window 2. If the terminal receives the second information within the RAR window 1 in the second frame, then the terminal will not know whether the second information is the RAR corresponding to the first frame or the RAR corresponding to the second frame.

For another example, the terminal 1 initiates random access in RO 1 within frame A, and the terminal 2 initiates random access in the same RO 1 within frame B. It is assumed that frame B is before frame A and is adjacent to frame A, and if the RAR window corresponding to the terminal 2 spans both frames A and B, it means that the RAR corresponding to the terminal 2 might be received within frame A, and the terminal 1 might receive the RAR corresponding to the terminal 2 during reception, resulting in a RAR collision.

Alternatively, similar situations due to other possible reasons are not ruled out. Therefore, the second information may further include information for indicating the SFN. The SFN indicated by this information can determine which system frame the received RAR corresponds to, thereby avoiding RAR conflicts between RACHs of different SFNs.

In some embodiments, the terms "frame", "radio frame", "slot", "sub-slot", "mini-slot", "symbol", and "transmission time interval (TTI)" can be used interchangeably.

In some embodiments, the first time window includes a first time domain position. This first time domain position can be the starting position of the first time window.

In some embodiments, the first time domain position can be determined based on a second predefined rule. This second predefined rule predefines the first time domain position.

For example, the second predefined rule predefines the starting time domain position of the RAR window.

In some embodiments, the first time domain position may be based on the network device configuration.

For example, the first time domain position is determined based on the configuration of the second network device.

In some embodiments, the first time domain position can be determined based on a second time domain position and a fourth duration. The second time domain position is the end position of the RO that sends the first information. The fourth duration is a time domain offset between the first and second time domain positions.

In some embodiments, the time domain offset between the first time domain position and the second time domain position can be denoted as T or offset.

For example, the second time domain position can be determined based on the end position of the target RO. The time domain offset between the first and second time domain positions can be configured by the second network device, or the time domain offset between the first and second time domain positions can be specified by a protocol. The first time domain position is determined based on the end position of the target RO and T, that is, the first time domain position is a time domain position that is offset by T from the end position of the target RO.

In some embodiments, the terminal can receive the type-1 PDCCH in the RAR window according to the configuration of the Type 1 common search space and the corresponding CORESET. How the terminal specifically determines the timing of detecting the type-1 PDCCH can be referred to relevant schemes, and the specific process will not be elaborated in the present disclosure.

In some embodiments, the terms such as "search space", "search space set", "search space configuration", and "search space set configuration" can be used interchangeably.

In some embodiments, where the first time domain position is determined based on the second time domain position and the fourth duration, the first time domain position can be the first Orthogonal Frequency Division Multiplexing (OFDM) symbol that is offset by the fourth duration from the second time domain position.

For example, the starting position of the RAR window can be the first OFDM symbol that is offset by T from the end of the target RO.

In some embodiments, where the first time domain position is determined based on the second time domain position and the fourth duration, the first time domain position can be the first OFDM symbol of a Control Resource Set (CORESET) corresponding to the type 1 common search space set for the terminal to receive the physical downlink control channel of the first network device or the second network device after a position which is offset by the fourth duration from the second time domain position.

For example, the starting position of the RAR window can be the first OFDM symbol of the CORESET corresponding to the earliest type-1 CSS set for receiving the PDCCH after a position which is offset by T from the end of the target RO.

In some embodiments, the type-1 CSS set and the corresponding CORESET configuration can be for the serving cell.

In some embodiments, the type-1 CSS set and the corresponding CORESET configuration can be for the candidate cell.

In some embodiments, after receiving the second information, the terminal can perform RAR descrambling on the second information.

For example, when the RAR is scrambled using the RA-RNTI, the terminal can descramble the RAR based on the RA-RNTI. For details on the RAR scrambling and descrambling processes, reference can be made to the relevant solutions, which will not be repeated here.

In some embodiments, if the terminal does not receive the eighth information sent by the second network device, the terminal may choose to resend the first information to the first network device.

Alternatively, considering a case where the first network device does not receive the first information due to low power of sending the first information, the terminal can increase the sending power to resend the first information to the first network device.

In some embodiments, the solutions involved in the various embodiments of the present disclosure can be applied to the contention-free random access scenario.

The sensing communication method involved in embodiments of the present disclosure may include at least one of the steps S2101 to S2106. For example, steps S2104 and S2106 can be implemented as the independent embodiment, steps S2104 and S2105 and S2106 can be implemented as the independent embodiment, steps S2101 and S2104 and S2106 can be implemented as the independent embodiment, steps S2101 and S2104 and S2105 and S2106 can be implemented as the independent embodiment, steps S2101 and S2102 and S2104 and S2106 can be implemented as the independent embodiment, steps S2101 and S2103 and S2104 and S2106 can be implemented as the independent embodiment, and steps S2101 and S2102 and S2103 and S2104 and S2106 can be implemented as the independent embodiment, but are not limited thereto.

In some embodiments, steps S2102 and S2103 can be performed in an interchangeable order with or simultaneously with the step S2101.

In some embodiments, the step S2102 is optional, and one or more of these steps may be omitted or substituted in different embodiments.

In some embodiments, the step S2103 is optional, and one or more of these steps may be omitted or substituted in different embodiments.

In some embodiments, the step S2101 is optional, and one or more of these steps may be omitted or substituted in different embodiments.

In some embodiments, other implementations described before or after the specification corresponding to FIG. 2 may be referred to.

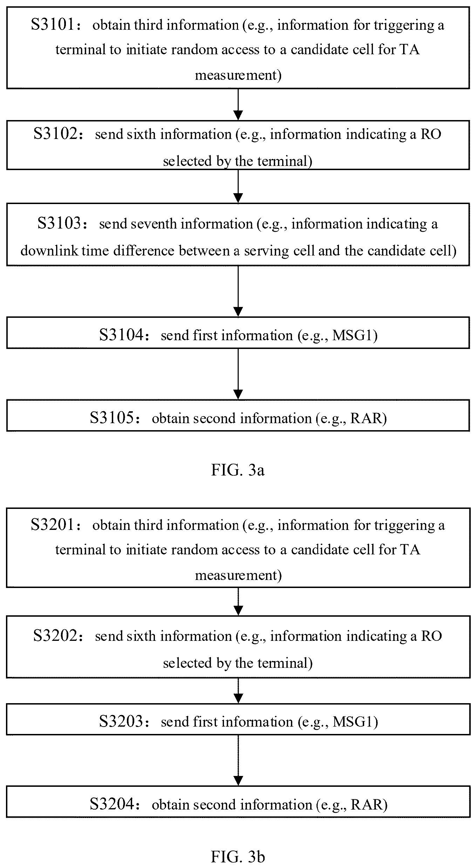

FIG. 3a shows a flowchart of a random access method according to an example embodiment. As shown in FIG. 3a, the embodiment of the present disclosure relates to the random access method that can be performed on a terminal. The method includes steps S3101 to S3105.

In the step S3101, third information is obtained,

An implementation of step S3101 may be referenced from the implementation of step S2101 in FIG. 2, and other related parts of the embodiment described in FIG. 2, which will not be repeated here.

In some embodiments, the terminal obtains the third information specified by the protocol.

In some embodiments,

In some embodiments, the terminal performs the processing to obtain the third information.

In the step S3102, sixth information is sent.

An implementation of step S3102 may be referenced from the implementation of step S2102 in FIG. 2, and other related parts of the embodiment described in FIG. 2, which will not be repeated here.

In the step S3103, seventh information is sent.

An implementation of step S3103 may be referenced from the implementation of step S2103 in FIG. 2, and other related parts of the embodiment described in FIG. 2, which will not be repeated here.

In the step S3104, first information is sent.

An implementation of step S3104 may be referenced from the implementation of step S2104 in FIG. 2, and other related parts of the embodiment described in FIG. 2, which will not be repeated here.

In the step S3105, second information is obtained.

An implementation of step S3105 may be referenced from the implementation of step S2106 in FIG. 2, and other related parts of the embodiment described in FIG. 2, which will not be repeated here.

In some embodiments, the terminal obtains the second information specified by the protocol.

In some embodiments, the terminal obtains the second information from a higher layer.

In some embodiments, the terminal performs the processing to obtain the second information.

In some embodiments, the step S3105 is omitted, and the terminal autonomously implements the function indicated by the second information, or the above function is defaulted or set to default.

FIG. 3b shows a flowchart of another random access method according to an example embodiment. As shown in FIG. 3b, the embodiment of the present disclosure relates to the random access method that can be performed on a terminal. The method includes steps S3201 to S3204.

In the step S3201, third information is obtained.

An implementation of step S3201 may be referenced from the implementation of step S2101 in FIG. 2, the implementation of step S3101 in FIG. 3a, other related parts of the embodiment described in FIG. 2 and other related parts of the embodiment described in FIG. 3a, which will not be repeated here.

In some embodiments, the step S3201 is omitted, and the terminal autonomously implements the function indicated by the third information, or the above function is defaulted or set to default.

In the step 3202, sixth information is sent.

An implementation of step S3202 may be referenced from the implementation of step S2102 in FIG. 2, the implementation of step S3102 in FIG. 3a, other related parts of the embodiment described in FIG. 2 and other related parts of the embodiment described in FIG. 3a, which will not be repeated here.

In the step 3203, first information is sent.

An implementation of step S3203 may be referenced from the implementation of step S2104 in FIG. 2, the implementation of step S3104 in FIG. 3a, other related parts of the embodiment described in FIG. 2 and other related parts of the embodiment described in FIG. 3a, which will not be repeated here.

In the step 3204, second information is obtained.

An implementation of step S3204 may be referenced from the implementation of step S2106 in FIG. 2, the implementation of step S3105 in FIG. 3a, other related parts of the embodiment described in FIG. 2 and other related parts of the embodiment described in FIG. 3a, which will not be repeated here.

In some embodiments, the step S3204 is omitted, and the terminal autonomously implements the function indicated by the second information, or the above function is defaulted or set to default.

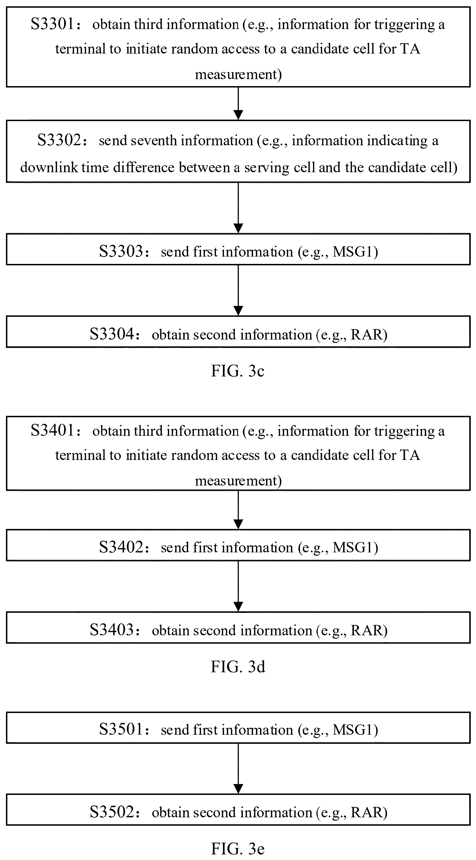

FIG. 3c shows a flowchart of yet another random access method according to an example embodiment. As shown in FIG. 3c, the embodiment of the present disclosure relates to the random access method that can be performed on a terminal. The method includes steps S3301 to S3304.

In the step S3301, third information is obtained.

An implementation of step S3301 may be referenced from the implementation of step S2101 in FIG. 2, the implementation of step S3101 in FIG. 3a, the implementation of step S3201 in FIG. 3b, other related parts of the embodiment described in FIG. 2, other related parts of the embodiment described in FIG. 3a and other related parts of the embodiment described in FIG. 3b, which will not be repeated here.

In some embodiments, the step S3301 is omitted, and the terminal autonomously implements the function indicated by the third information, or the above function is defaulted or set to default.

In the step 3302, seventh information is sent.

An implementation of step S3302 may be referenced from the implementation of step S2103 in FIG. 2, the implementation of step S3103 in FIG. 3a, other related parts of the embodiment described in FIG. 2 and other related parts of the embodiment described in FIG. 3a, which will not be repeated here.

In the step 3303, first information is sent.

An implementation of step S3303 may be referenced from the implementation of step S2104 in FIG. 2, the implementation of step S3104 in FIG. 3a, the implementation of step S3203 in FIG. 3b, other related parts of the embodiment described in FIG. 2, other related parts of the embodiment described in FIG. 3a and other related parts of the embodiment described in FIG. 3b, which will not be repeated here.

In the step 3304, second information is obtained.

An implementation of step S3304 may be referenced from the implementation of step S2106 in FIG. 2, the implementation of step S3105 in FIG. 3a, the implementation of step S3204 in FIG. 3b, other related parts of the embodiment described in FIG. 2, other related parts of the embodiment described in FIG. 3a and other related parts of the embodiment described in FIG. 3b, which will not be repeated here.

In some embodiments, the step S3304 is omitted, and the terminal autonomously implements the function indicated by the second information, or the above function is defaulted or set to default.

FIG. 3d shows a flowchart of still another random access method according to an example embodiment. As shown in FIG. 3d, the embodiment of the present disclosure relates to the random access method that can be performed on a terminal. The method includes steps S3401 to S3403.

In the step S3401, third information is obtained.

An implementation of step S3401 may be referenced from the implementation of step S2101 in FIG. 2, the implementation of step S3101 in FIG. 3a, the implementation of step S3201 in FIG. 3b, the implementation of step S3301 in FIG. 3c, other related parts of the embodiment described in FIG. 2, other related parts of the embodiment described in FIG. 3a, other related parts of the embodiment described in FIG. 3b and other related parts of the embodiment described in FIG. 3c, which will not be repeated here.

In some embodiments, the step S3401 is omitted, and the terminal autonomously implements the function indicated by the third information, or the above function is defaulted or set to default.

In the step 3402, first information is sent.

An implementation of step S3402 may be referenced from the implementation of step S2104 in FIG. 2, the implementation of step S3104 in FIG. 3a, the implementation of step S3203 in FIG. 3b, the implementation of step S3303 in FIG. 3c, other related parts of the embodiment described in FIG. 2, other related parts of the embodiment described in FIG. 3a, other related parts of the embodiment described in FIG. 3b and other related parts of the embodiment described in FIG. 3c, which will not be repeated here.

In the step 3403, second information is obtained.

An implementation of step S3403 may be referenced from the implementation of step S2106 in FIG. 2, the implementation of step S3105 in FIG. 3a, the implementation of step S3204 in FIG. 3b, the implementation of step S3304 in FIG. 3c, other related parts of the embodiment described in FIG. 2, other related parts of the embodiment described in FIG. 3a, other related parts of the embodiment described in FIG. 3b and other related parts of the embodiment described in FIG. 3c, which will not be repeated here.

In some embodiments, the step S3403 is omitted, and the terminal autonomously implements the function indicated by the second information, or the above function is defaulted or set to default.

FIG. 3e shows a flowchart of another random access method according to an example embodiment. As shown in FIG. 3e, the embodiment of the present disclosure relates to the random access method that can be performed on a terminal. The method includes steps S3501 to S3502.

In the step S3501, first information is sent.

An implementation of step S3501 may be referenced from the implementation of step S2104 in FIG. 2, the implementation of step S3104 in FIG. 3a, the implementation of step S3203 in FIG. 3b, the implementation of step S3303 in FIG. 3c, the implementation of step S3402 in FIG. 3d, other related parts of the embodiment described in FIG. 2, other related parts of the embodiment described in FIG. 3a, other related parts of the embodiment described in FIG. 3b, other related parts of the embodiment described in FIG. 3c and other related parts of the embodiment described in FIG. 3d, which will not be repeated here.

In some embodiments, the method further includes: receiving third information sent by the second network device, wherein the third information is configured to indicate to send the first information to the first network device.

In some embodiments, sending the first information to the first network device includes: sending the first information to the first network device based on a target RO, wherein the target RO is determined by at least one of the following manners: the target RO is determined based on fourth information, wherein the third information includes the fourth information, and the fourth information is configured to indicate the target RO; the target RO is determined based on the fourth information and fifth information, wherein the third information includes the fourth information and the fifth information, wherein the fourth information is configured to indicate a plurality of ROs, and the fifth information is configured to indicate one of the plurality of ROs as the target RO; or the target RO is determined based on the fourth information and a third predefined rule, wherein the third information includes the fourth information, the fourth information is configured to indicate the plurality of ROs, and the third predefined rule predefines selection of one of the plurality of ROs as the target RO.

In some embodiments, the target RO is determined based on the fourth information and the third predefined rule, and the method further includes: sending sixth information, wherein the sixth information is configured to indicate the selected RO to the second network device.

In some embodiments, the method further includes: sending seventh information, wherein the seventh information is configured to indicate a downlink time difference between the first network device and the second network device.

In the step 3502, second information is obtained.

An implementation of step S3502 may be referenced from the implementation of step S2106 in FIG. 2, the implementation of step S3105 in FIG. 3a, the implementation of step S3204 in FIG. 3b, the implementation of step S3304 in FIG. 3c, the implementation of step S3403 in FIG. 3d, other related parts of the embodiment described in FIG. 2, other related parts of the embodiment described in FIG. 3a, other related parts of the embodiment described in FIG. 3b, other related parts of the embodiment described in FIG. 3c and other related parts of the embodiment described in FIG. 3d, which will not be repeated here.

In some embodiments, the step S3502 is omitted, and the terminal autonomously implements the function indicated by the second information, or the above function is defaulted or set to default.

In some embodiments, receiving the second information sent by the second network device includes: receiving, within a first time window, the second information sent by the second network device, wherein the first time window is determined based on a first time domain position and a first duration.

In some embodiments, the first duration is determined by at least one of the following manners: the first duration is determined based on a first predefined rule, wherein the first duration is predefined by the first predefined rule; the first duration is determined based on a network device configuration; or the first duration is determined based on a second duration and a third duration, wherein the second duration is a duration configured by the network device, and the third duration is configured by the network device or determined based on the first predefined rule.

In some embodiments, the first duration is determined based on the second duration and the third duration, and the second information includes information for indicating a system frame number.

In some embodiments, the first time domain position is determined by at least one of the following manners: the first time domain position is determined based on a second predefined rule, wherein the first time domain position is predefined by the second predefined rule; the first time domain position is determined based on a network device configuration; or the first time domain position is determined based on a second time domain position and a fourth duration, wherein the second time domain position is an end position of a random access channel occasion (RO) for sending the first information, and the fourth duration is configured to indicate a time domain offset between the first time domain position and the second time domain position.

In some embodiments, the first time domain position is determined based on the second time domain position and the fourth duration, and the first time domain position is a first Orthogonal Frequency Division Multiplexing (OFDM) symbol that is offset by the fourth duration from the second time domain position.

In some embodiments, the first time domain position is determined based on the second time domain position and the fourth duration, and the first time domain position is a first OFDM symbol for the terminal to receive a Control Resource Set (CORESET) corresponding to a first type 1 common search space set for sending a physical downlink control channel of the first network device or the second network device after a position that is offset by the fourth duration from the second time domain position.

In some embodiments, the second information is carried in at least one of the following manners: a defined Medium Access Control Protocol Data Unit (MAC PDU) command; or a newly added Medium Access Control Control Element (MAC CE) for carrying the second information.

In some embodiments, the second information includes at least one of the following parameters: a TA of the candidate cell; a cell identity of the candidate cell; a logical identity of the candidate cell; or a Timing Advance Group (TAG) identity of the candidate cell.

In some embodiments, the type 1 common search space set of the physical downlink control channel and its associated CORESET are resources of the first network device or the second network device.

In some embodiments, receiving, within the first time window, the second information sent by the second network device includes: receiving, within the first time window, a Physical Downlink Control Channel (PDCCH) for scheduling a Physical Downlink Shared Channel (PDSCH) resource, wherein the PDSCH resource is configured to send the second information.

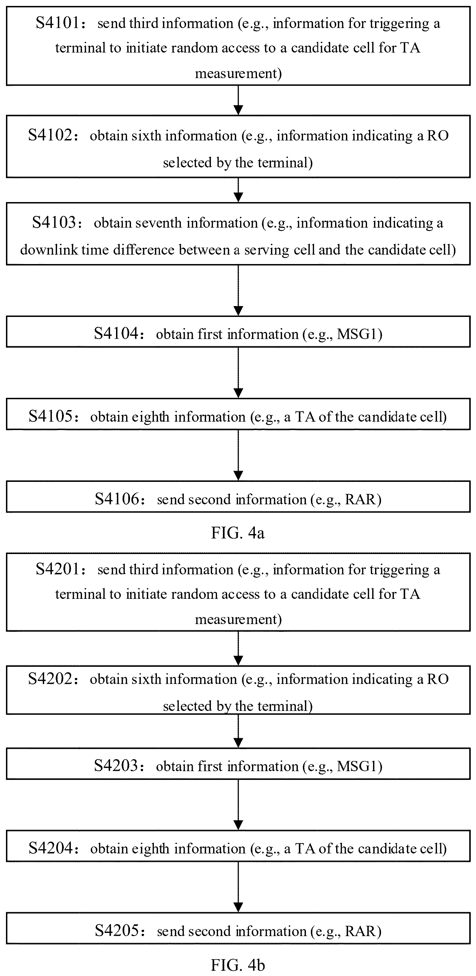

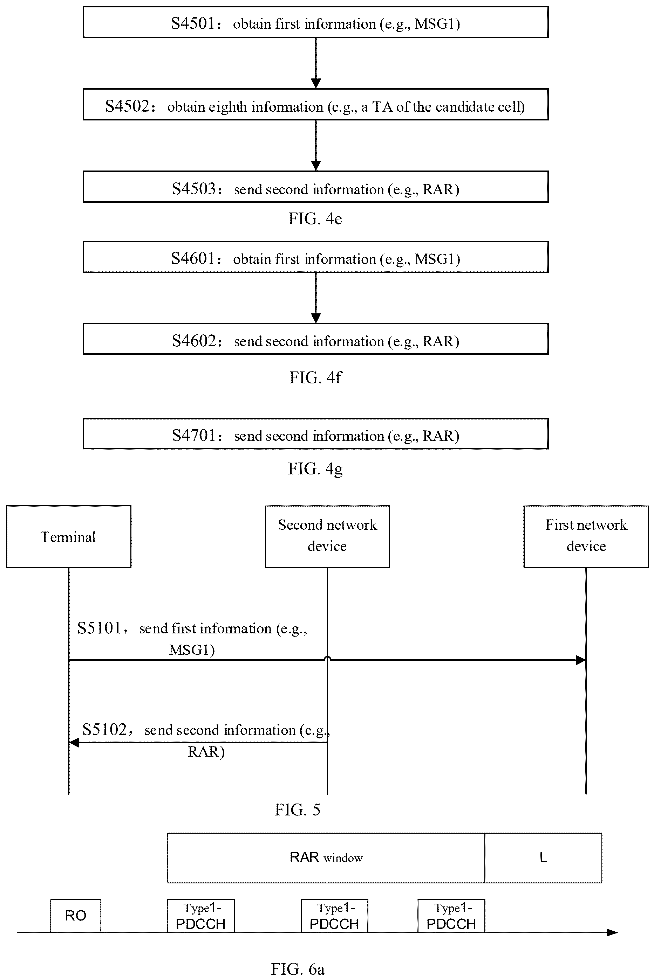

FIG. 4a shows a flowchart of yet another random access method according to an example embodiment. As shown in FIG. 4a, the embodiment of the present disclosure relates to the random access method that can be performed on a second network device. The method includes steps S4101 to S4106.

In the step S4101, third information is sent.

The implementation of step S4101 may refer to the implementation of step S2101 in FIG. 2 and other related parts in the embodiment related to FIG. 2, which will not be repeated here.

In the step S4102, sixth information is obtained.

The implementation of step S4102 may refer to the implementation of step S2102 in FIG. 2 and other related parts in the embodiment related to FIG. 2, which will not be repeated here.

In some embodiments, the second network device obtains the sixth information specified by the protocol.

In some embodiments, the second network device obtains the sixth information from a higher layer.

In some embodiments, the second network device performs the processing to obtain the sixth information.

In some embodiments, the step S4102 is omitted, and the second network device autonomously implements the function indicated by the sixth information, or the above function is defaulted or set to default.

In the step S4103, seventh information is obtained.

The implementation of step S4103 may refer to the implementation of step S2103 in FIG. 2 and other related parts in the embodiment related to FIG. 2, which will not be repeated here.

In some embodiments, the second network device obtains the seventh information specified by the protocol.

In some embodiments, the second network device obtains the seventh information from a higher layer.

In some embodiments, the second network device performs the processing to obtain the seventh information.

In some embodiments, the step S4103 is omitted, and the second network device autonomously implements the function indicated by the seventh information, or the above function is defaulted or set to default.

In the step S4104, first information is obtained.

An implementation of step S4104 may be referenced from the implementation of step S2104 in FIG. 2, and other related parts of the embodiment described in FIG. 2, which will not be repeated here.

In some embodiments, the second network device obtains the first information specified by the protocol.

In some embodiments, the second network device obtains the first information from a higher layer.

In some embodiments, the second network device performs the processing to obtain the first information.

In some embodiments, the step S4104 is omitted, and the second network device autonomously implements the function indicated by the first information, or the above function is defaulted or set to default.

In the step S4105, eighth information is obtained.

An implementation of step S4105 may be referenced from the implementation of step S2105 in FIG. 2, and other related parts of the embodiment described in FIG. 2, which will not be repeated here.

In some embodiments, the second network device obtains the eighth information specified by the protocol.

In some embodiments, the second network device obtains the eighth information from a higher layer.

In some embodiments, the second network device performs the processing to obtain the eighth information.

In some embodiments, the step S4105 is omitted, and the second network device autonomously implements the function indicated by the eighth information, or the above function is defaulted or set to default.

In the step S4106, second information is sent.

An implementation of step S4106 may be referenced from the implementation of step S2106 in FIG. 2, and other related parts of the embodiment described in FIG. 2, which will not be repeated here.

FIG. 4b shows a flowchart of still another random access method according to an example embodiment. As shown in FIG. 4b, the embodiment of the present disclosure relates to the random access method that can be performed on a second network device. The method includes steps S4201 to S4205.

In the step S4201, third information is sent.

An implementation of step S4201 may be referenced from the implementation of step S2101 in FIG. 2, the implementation of step S4101 in FIG. 4a, other related parts of the embodiment described in FIG. 2 and other related parts of the embodiment described in FIG. 4a, which will not be repeated here.

In the step S4202, sixth information is obtained.

An implementation of step S4202 may be referenced from the implementation of step S2102 in FIG. 2, the implementation of step S4102 in FIG. 4a, other related parts of the embodiment described in FIG. 2 and other related parts of the embodiment described in FIG. 4a, which will not be repeated here.

In some embodiments, the step S4202 is omitted, and the second network device autonomously implements the function indicated by the sixth information, or the above function is defaulted or set to default.

In the step S4203, first information is obtained.

An implementation of step S4203 may be referenced from the implementation of step S2104 in FIG. 2, the implementation of step S4104 in FIG. 4a, other related parts of the embodiment described in FIG. 2 and other related parts of the embodiment described in FIG. 4a, which will not be repeated here.

In some embodiments, the step S4203 is omitted, and the second network device autonomously implements the function indicated by the first information, or the above function is defaulted or set to default.

In the step S4204, eighth information is obtained.

An implementation of step S4204 may be referenced from the implementation of step S2105 in FIG. 2, the implementation of step S4105 in FIG. 4a, other related parts of the embodiment described in FIG. 2 and other related parts of the embodiment described in FIG. 4a, which will not be repeated here.

In some embodiments, the step S4204 is omitted, and the second network device autonomously implements the function indicated by the eighth information, or the above function is defaulted or set to default.

In the step S4205, second information is sent.

An implementation of step S4205 may be referenced from the implementation of step S2106 in FIG. 2, the implementation of step S4106 in FIG. 4a, other related parts of the embodiment described in FIG. 2 and other related parts of the embodiment described in FIG. 4a, which will not be repeated here.

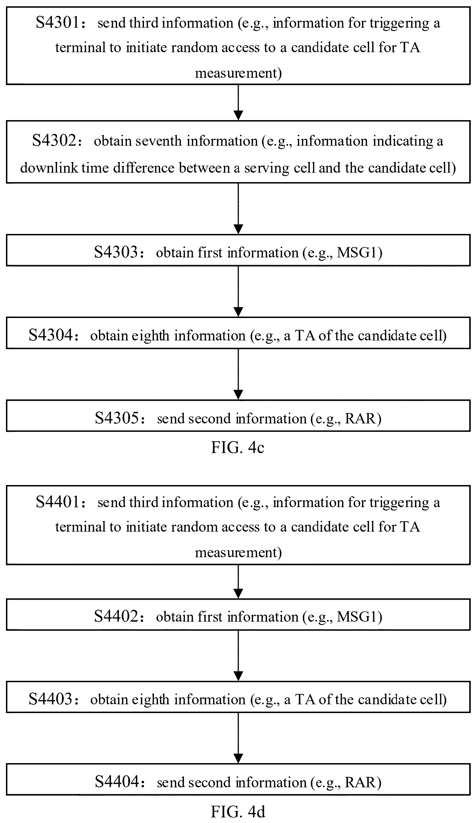

FIG. 4c shows a flowchart of another random access method according to an example embodiment. As shown in FIG. 4c, the embodiment of the present disclosure relates to the random access method that can be performed on a second network device. The method includes steps S4301 to S4305.

In the step S4301, third information is sent.

An implementation of step S4301 may be referenced from the implementation of step S2101 in FIG. 2, the implementation of step S4101 in FIG. 4a, the implementation of step S4201 in FIG. 4b, other related parts of the embodiment described in FIG. 2, other related parts of the embodiment described in FIG. 4a and other related parts of the embodiment described in FIG. 4b, which will not be repeated here.

In the step S4302, seventh information is obtained.

An implementation of step S4302 may be referenced from the implementation of step S2103 in FIG. 2, the implementation of step S4103 in FIG. 4a, other related parts of the embodiment described in FIG. 2 and other related parts of the embodiment described in FIG. 4a, which will not be repeated here.

In some embodiments, the step S4302 is omitted, and the second network device autonomously implements the function indicated by the sixth information, or the above function is defaulted or set to default.

In the step S4303, first information is obtained.

An implementation of step S4303 may be referenced from the implementation of step S2104 in FIG. 2, the implementation of step S4104 in FIG. 4a, the implementation of step S4203 in FIG. 4b, other related parts of the embodiment described in FIG. 2, other related parts of the embodiment described in FIG. 4a and other related parts of the embodiment described in FIG. 4b, which will not be repeated here.

In some embodiments, the step S4303 is omitted, and the second network device autonomously implements the function indicated by the first information, or the above function is defaulted or set to default.

In the step S4304, eighth information is obtained.

An implementation of step S4304 may be referenced from the implementation of step S2105 in FIG. 2, the implementation of step S4105 in FIG. 4a, the implementation of step S4204 in FIG. 4b, other related parts of the embodiment described in FIG. 2, other related parts of the embodiment described in FIG. 4a and other related parts of the embodiment described in FIG. 4b, which will not be repeated here.

In some embodiments, the step S4304 is omitted, and the second network device autonomously implements the function indicated by the eighth information, or the above function is defaulted or set to default.

In the step S4305, second information is sent.

An implementation of step S4305 may be referenced from the implementation of step S2106 in FIG. 2, the implementation of step S4106 in FIG. 4a, the implementation of step S4205 in FIG. 4b, other related parts of the embodiment described in FIG. 2, other related parts of the embodiment described in FIG. 4a and other related parts of the embodiment described in FIG. 4b, which will not be repeated here.

FIG. 4d shows a flowchart of yet another random access method according to an example embodiment. As shown in FIG. 4d, the embodiment of the present disclosure relates to the random access method that can be performed on a second network device. The method includes steps S4401 to S4404.

In the step S4401, third information is sent.

An implementation of step S4401 may be referenced from the implementation of step S2101 in FIG. 2, the implementation of step S4101 in FIG. 4a, the implementation of step S4201 in FIG. 4b, the implementation of step S4301 in FIG. 4c, other related parts of the embodiment described in FIG. 2, other related parts of the embodiment described in FIG. 4a, other related parts of the embodiment described in FIG. 4b and other related parts of the embodiment described in FIG. 4c, which will not be repeated here.

In the step S4402, first information is obtained.

An implementation of step S4402 may be referenced from the implementation of step S2104 in FIG. 2, the implementation of step S4104 in FIG. 4a, the implementation of step S4203 in FIG. 4b, the implementation of step S4303 in FIG. 4c, other related parts of the embodiment described in FIG. 2, other related parts of the embodiment described in FIG. 4a, other related parts of the embodiment described in FIG. 4b and other related parts of the embodiment described in FIG. 4c, which will not be repeated here.

In some embodiments, the step S4303 is omitted, and the second network device autonomously implements the function indicated by the first information, or the above function is defaulted or set to default.

In the step S4403, eighth information is obtained.

An implementation of step S4403 may be referenced from the implementation of step S2105 in FIG. 2, the implementation of step S4105 in FIG. 4a, the implementation of step S4204 in FIG. 4b, the implementation of step S4304 in FIG. 4c, other related parts of the embodiment described in FIG. 2, other related parts of the embodiment described in FIG. 4a, other related parts of the embodiment described in FIG. 4b and other related parts of the embodiment described in FIG. 4c, which will not be repeated here.

In some embodiments, the step S4403 is omitted, and the second network device autonomously implements the function indicated by the eighth information, or the above function is defaulted or set to default.

In the step S4404, second information is sent.

An implementation of step S4404 may be referenced from the implementation of step S2106 in FIG. 2, the implementation of step S4106 in FIG. 4a, the implementation of step S4205 in FIG. 4b, the implementation of step S4305 in FIG. 4c, other related parts of the embodiment described in FIG. 2, other related parts of the embodiment described in FIG. 4a, other related parts of the embodiment described in FIG. 4b and other related parts of the embodiment described in FIG. 4c, which will not be repeated here.

FIG. 4e shows a flowchart of still another random access method according to an example embodiment. As shown in FIG. 4e, the embodiment of the present disclosure relates to the random access method that can be performed on a second network device. The method includes steps S4501 to S4503.

In the step S4501, first information is obtained.

An implementation of step S4501 may be referenced from the implementation of step S2104 in FIG. 2, the implementation of step S4104 in FIG. 4a, the implementation of step S4203 in FIG. 4b, the implementation of step S4303 in FIG. 4c, the implementation of step S4402 in FIG. 4d, other related parts of the embodiment described in FIG. 2, other related parts of the embodiment described in FIG. 4a, other related parts of the embodiment described in FIG. 4b, other related parts of the embodiment described in FIG. 4c and other related parts of the embodiment described in FIG. 4d, which will not be repeated here.

In some embodiments, the step S4501 is omitted, and the second network device autonomously implements the function indicated by the first information, or the above function is defaulted or set to default.

In the step S4502, eighth information is obtained.

An implementation of step S4502 may be referenced from the implementation of step S2105 in FIG. 2, the implementation of step S4105 in FIG. 4a, the implementation of step S4204 in FIG. 4b, the implementation of step S4304 in FIG. 4c, the implementation of step S4403 in FIG. 4d, other related parts of the embodiment described in FIG. 2, other related parts of the embodiment described in FIG. 4a, other related parts of the embodiment described in FIG. 4b, other related parts of the embodiment described in FIG. 4c and other related parts of the embodiment described in FIG. 4d, which will not be repeated here.

In some embodiments, the step S4403 is omitted, and the second network device autonomously implements the function indicated by the eighth information, or the above function is defaulted or set to default.

In the step S4503, second information is sent.

An implementation of step S4503 may be referenced from the implementation of step S2106 in FIG. 2, the implementation of step S4106 in FIG. 4a, the implementation of step S4205 in FIG. 4b, the implementation of step S4305 in FIG. 4c, the implementation of step S4404 in FIG. 4d, other related parts of the embodiment described in FIG. 2, other related parts of the embodiment described in FIG. 4a, other related parts of the embodiment described in FIG. 4b, other related parts of the embodiment described in FIG. 4c and other related parts of the embodiment described in FIG. 4d, which will not be repeated here.

FIG. 4f shows a flowchart of another random access method according to an example embodiment. As shown in FIG. 4f, the embodiment of the present disclosure relates to the random access method that can be performed on a second network device. The method includes steps S4601 and S4602.

In the step S4601, first information is obtained.

An implementation of step S4601 may be referenced from the implementation of step S2104 in FIG. 2, the implementation of step S4104 in FIG. 4a, the implementation of step S4203 in FIG. 4b, the implementation of step S4303 in FIG. 4c, the implementation of step S4402 in FIG. 4d, the implementation of step S4501 in FIG. 4e, other related parts of the embodiment described in FIG. 2, other related parts of the embodiment described in FIG. 4a, other related parts of the embodiment described in FIG. 4b, other related parts of the embodiment described in FIG. 4c, other related parts of the embodiment described in FIG. 4d and other related parts of the embodiment described in FIG. 4e, which will not be repeated here.

In some embodiments, the step S4501 is omitted, and the second network device autonomously implements the function indicated by the first information, or the above function is defaulted or set to default.

In the step S4602, second information is sent.

An implementation of step S4602 may be referenced from the implementation of step S2106 in FIG. 2, the implementation of step S4106 in FIG. 4a, the implementation of step S4205 in FIG. 4b, the implementation of step S4305 in FIG. 4c, the implementation of step S4404 in FIG. 4d, the implementation of step S4503 in FIG. 4e, other related parts of the embodiment described in FIG. 2, other related parts of the embodiment described in FIG. 4a, other related parts of the embodiment described in FIG. 4b, other related parts of the embodiment described in FIG. 4c, other related parts of the embodiment described in FIG. 4d and other related parts of the embodiment described in FIG. 4e, which will not be repeated here.

FIG. 4g shows a flowchart of yet another random access method according to an example embodiment. As shown in FIG. 4g, the embodiment of the present disclosure relates to the random access method that can be performed on a second network device. The method includes step S4701.

In the step S4701, second information is sent.

An implementation of step S4701 may be referenced from the implementation of step S2106 in FIG. 2, the implementation of step S4106 in FIG. 4a, the implementation of step S4205 in FIG. 4b, the implementation of step S4305 in FIG. 4c, the implementation of step S4404 in FIG. 4d, the implementation of step S4503 in FIG. 4e, the implementation of step S4602 in FIG. 4f, other related parts of the embodiment described in FIG. 2, other related parts of the embodiment described in FIG. 4a, other related parts of the embodiment described in FIG. 4b, other related parts of the embodiment described in FIG. 4c, other related parts of the embodiment described in FIG. 4d, other related parts of the embodiment described in FIG. 4e and other related parts of the embodiment described in FIG. 4f, which will not be repeated here.

In some embodiments, sending the second information includes: sending the second information within a first time window, wherein the first time window is determined based on a first time domain position and a first duration.

In some embodiments, the first duration is determined by at least one of the following manners: the first duration is determined based on a first predefined rule, wherein the first duration is predefined by the first predefined rule; the first duration is determined based on a network device configuration; or the first duration is determined based on a second duration and a third duration, wherein the second duration is a duration configured by the network device, and the third duration is configured by the network device or determined based on the first predefined rule.

In some embodiments, the second information includes information for indicating a system frame number.

In some embodiments, the first time domain position is determined by at least one of the following manners: the first time domain position is determined based on a second predefined rule, wherein the first time domain position is predefined by the second predefined rule; the first time domain position is determined based on a network device configuration; or the first time domain position is determined based on a second time domain position and a fourth duration, wherein the second time domain position is an end position of a random access channel occasion (RO) for sending the first information, and the fourth duration is configured to indicate a time domain offset between the first time domain position and the second time domain position.

In some embodiments, the first time domain position is a first Orthogonal Frequency Division Multiplexing (OFDM) symbol that is offset by the fourth duration from the second time domain position.

In some embodiments, the first time domain position is a first OFDM symbol of a Control Resource Set (CORESET) corresponding to a first type 1 common search space set for sending a physical downlink control channel sent by the first network device or the second network device after a position that is offset by the fourth duration from the second time domain position.

In some embodiments, the method further includes: sending third information, wherein the third information is configured to indicate to the terminal to send the first information to the first network device.

In some embodiments, the third information is further configured to indicate to the terminal to send, based on a target RO, the first information to the first network device, wherein the target RO is determined by at least one of the following manners: the target RO is determined based on fourth information, wherein the third information includes the fourth information, and the fourth information is configured to indicate the target RO; the target RO is determined based on the fourth information and fifth information, wherein the third information includes the fourth information and the fifth information, wherein the fourth information is configured to indicate a plurality of ROs, and the fifth information is configured to indicate one of the plurality of ROs as the target RO; or the target RO is determined based on the fourth information and a third predefined rule, wherein the third information includes the fourth information, the fourth information is configured to indicate the plurality of ROs, and the third predefined rule predefines selection of one of the plurality of ROs as the target RO.

In some embodiments, the target RO is determined based on the fourth information and the third predefined rule, and the method further includes: receiving sixth information, wherein the sixth information is configured to indicate a RO selected by the terminal.

In some embodiments, the method further includes: receiving seventh information, wherein the seventh information is configured to indicate a downlink time difference between the first network device and the second network device.

In some embodiments, the second information is carried in at least one of the following manners: a defined Medium Access Control Protocol Data Unit (MAC PDU) command; or a newly added Medium Access Control Control Element (MAC CE) for carrying the second information.

In some embodiments, the second information includes at least one of the following parameters: a TA of the candidate cell; a cell identity of the candidate cell; a logical identity of the candidate cell; or a Timing Advance Group (TAG) identity of the candidate cell.

In some embodiments, the type 1 common search space set of the physical downlink control channel and its associated CORESET are resources of the first network device or the second network device.

In some embodiments, sending the second information within the first time window includes: sending, within the first time window, a Physical Downlink Control Channel (PDCCH) for scheduling a Physical Downlink Shared Channel (PDSCH) resource, wherein the PDSCH resource is configure to send the second information.

FIG. 5 shows a flowchart of still another random access method according to an example embodiment. As shown in FIG. 5, the embodiment of the present disclosure relates to the random access method, which includes steps S5101 and S5102.

In the step S5101, the terminal 101 sends first information to the first network device.

An implementation of step S5101 may be referenced from the implementation of step S2104 in FIG. 2, the implementation of step S4104 in FIG. 4a, the implementation of step S4203 in FIG. 4b, the implementation of step S4303 in FIG. 4c, the implementation of step S4402 in FIG. 4d, the implementation of step S4501 in FIG. 4e, other related parts of the embodiment described in FIG. 2, other related parts of the embodiment described in FIG. 4a, other related parts of the embodiment described in FIG. 4b, other related parts of the embodiment described in FIG. 4c, other related parts of the embodiment described in FIG. 4d and other related parts of the embodiment described in FIG. 4e, which will not be repeated here.

In the step S5102, the second network device sends second information to the terminal 101.

An implementation of step S5102 may be referenced from the implementation of step S2106 in FIG. 2, the implementation of step S4106 in FIG. 4a, the implementation of step S4205 in FIG. 4b, the implementation of step S4305 in FIG. 4c, the implementation of step S4404 in FIG. 4d, the implementation of step S4503 in FIG. 4e, the implementation of step S4602 in FIG. 4f, the implementation of step S4701 in FIG. 4g, other related parts of the embodiment described in FIG. 2, other related parts of the embodiment described in FIG. 4a, other related parts of the embodiment described in FIG. 4b, other related parts of the embodiment described in FIG. 4c, other related parts of the embodiment described in FIG. 4d, other related parts of the embodiment described in FIG. 4e, other related parts of the embodiment described in FIG. 4f and other related parts of the embodiment described in FIG. 4g, which will not be repeated here.

In the following, the present disclosure will describe the above-described scheme with more detailed embodiments.

In some embodiments, the RO position is determined.

In some embodiments, for the asynchronous problem between different cells: the network implements a time difference obtained through interaction between networks, or the user reports the time difference to the serving cell.

In some embodiments, RO selection: even if the serving cell indicates the SSB and the PRACH mask index, the RO available to the user may not be unique, and it is necessary to synchronize which RO is actually selected.

In some embodiments, Option1: the protocol specifies that the selection of RO is unique.

In some embodiments, Option2: the serving cell indicates a unique RO in the PDCCH order.

In some embodiments, Option 3: the user reports the selected RO to the serving cell.

In some embodiments, the RAR window is determined:
Manner 1: extend the length of the window.

In some embodiments, the length of the RAR window is increased to include the interaction time between cells; considering that the length of the window may exceed 10ms after adding L, it is necessary to indicate System Frame Number (SFN) information in the RAR to avoid RAR conflicts of RACHs with different SFNs.

Manner 2: modify the starting position of the RAR window.

In some embodiments, case 1: an interval from the RO to the RAR window is increased by a fixed T, that is, the starting position of the RAR window begins with the first symbol (which is offset by T time units from the end of the RO) of the earliest type 1 PDCCH; or more directly, since it is not necessary to receive the DCI of the target cell, it is considered that the starting position of the RAR window is defined as the first symbol which is offset by T time units from the RO.

In some embodiments, case 2: the offset is defined for the RAR window, and the offset is configured by the network.

Manner 3: modify the starting position and extend the window length.

In some embodiments, the starting position and length of the RAR can be configured by the network. The offset of the starting position and the window duration or an additional length L can be configured. Specifically, the starting position can begin after the offset ends, or begin with the first symbol of the earliest type 1 PDCCH after the offset ends.

It should be noted that in the above manners, when the specific starting position is determined through the type1 PDCCH, it is considered that the RAR is received from the serving cell, and the type1 PDCCH can also be for the serving cell.

In some embodiments, the RAR transmission method is as follows: after receiving the TA value exchanged with the candidate cell, the serving cell schedules the PDSCH through the type1 PDCCH in the RAR window.

In some embodiments, the transmission beam is either a transmission beam for the PDCCH order or a transmission beam most recently indicated to the user.

In some embodiments, the RAR payload may still be the MAC PDU from the random access procedure, which includes at least the TA value of the candidate cell, the cell ID/logical ID of the candidate cell, or the TAG ID of the candidate cell; or a new MAC CE may be defined.

FIG. 6a shows a possible first time window, where the first duration of the first time window is the sum of the second and third durations. The second duration can be the default RAR window duration specified in the protocol, i.e., the RAR window shown in FIG. 6a. The third duration is L, which is used to compensate for the time corresponding to the interaction between different cells.

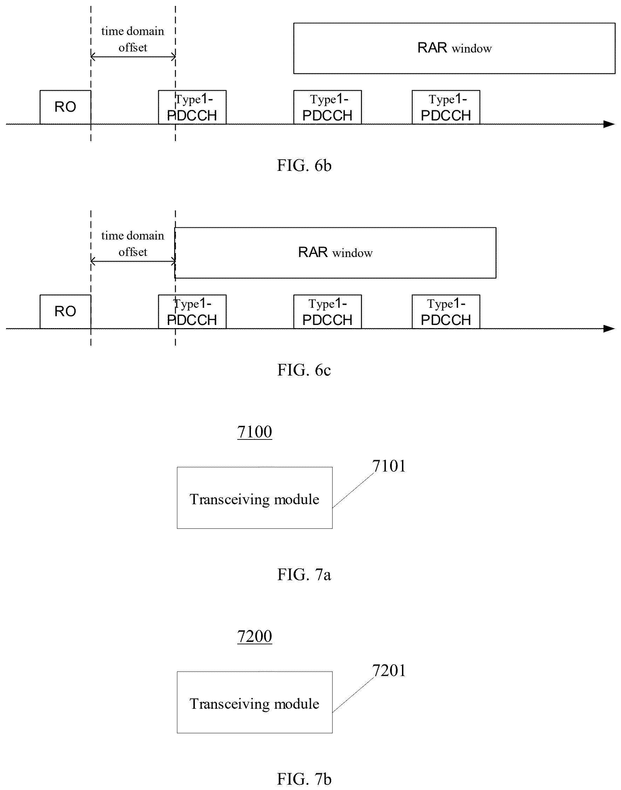

FIG. 6b shows a possible first time window, where the starting position of the RAR window can be the first OFDM symbol of the first type 1 PDCCH after a position which is offset by the time domain offset from the end of the RO. The time domain offset can be either T or offset, as mentioned above.

It can be seen that if the position which is offset by the time domain offset from the end of the RO is exactly within a certain type 1 PDCCH occasion, then the next type 1 PDCCH after that type 1 PDCCH can be used as the first type 1 PDCCH.

FIG. 6c shows a possible first time window, where the starting position of the RAR window can be the first OFDM symbol that is offset by the time domain offset from the end of the RO. The time domain offset can be either T or offset, as mentioned above. It can be seen that in this example, regardless of whether the position which is offset by the time domain offset from the end of the RO is within a certain type 1 PDCCH occasion, the first OFDM symbol that is offset by the time domain offset from the end of the RO can be used as the starting position of the RAR window.

In the embodiments of the present disclosure, the steps may be implemented as independent embodiments. Partial or complete steps, and their implementations may be combined arbitrarily with partial or complete steps in other embodiments, or with implementations in other embodiments.

Embodiments of the present disclosure further provide a device for implementing any of the above methods. For example, a random access device is provided, where the device includes a unit or module for implementing the steps performed by the terminal (e.g., terminal) in any of the above methods. For example, another random access device is provided, where the device includes a unit or module for implementing the steps performed by the second network device (such as an access network device, a core network functional node, a core network device, etc.) in any of the above methods.

It should be understood that the division of units or modules in the above device is only a logical functional division. In actual implementations, they may be completely or partially integrated into a single physical entity, or they may be physically separated. Furthermore, the units or modules in the device may be implemented in the form of a processor invoking software, for example, the device includes a processor connected to a memory storing an instruction, and the processor invokes the instruction stored in the memory to implement any of the above methods or to implement the functions of the units or modules of the device. The processor is, for example, a general-purpose processor, such as a central processing unit (CPU) or a microprocessor, and the memory is either internal or external to the device. Alternatively, the units or modules in the device may be implemented in the form of hardware circuits. The functions of some or all of the units or modules may be implemented through the design of the hardware circuits, where the hardware circuits may be understood as one or more processors. For example, in one implementation, the hardware circuit is an application-specific integrated circuit (ASIC), and the functions of some or all of the units or modules are implemented through the design of the logical relationships between the components within the circuit. In another implementation, for example, the hardware circuit described above may be implemented by using a programmable logic device (PLD), such as a field programmable gate array (FPGA), which may include a large number of logic gate circuits. The connection relationships between the logic gate circuits are configured through a configuration file, thereby implementing the functions of some or all of the units or modules described above. All units or modules of the above device may be implemented entirely by a processor invoking software, or entirely by hardware circuits, or partially by a processor invoking software and the rest by hardware circuits.

In the embodiments of the present disclosure, the processor is a circuit capable of signal processing. In one implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may implement certain functions through the logical relationships of hardware circuits, where the logical relationships of the aforementioned hardware circuits are fixed or reconfigurable. For example, the processor may be a hardware circuit implemented as an application-specific integrated circuit (ASIC) or a programmable logic device (PLD), such as an FPGA. In a reconfigurable hardware circuit, the process of the processor loading a configuration file to implement the hardware circuit configuration may be understood as the process of the processor loading instructions to implement the functions of some or all of the above units or modules. Alternatively, the processor may be a hardware circuit designed for artificial intelligence, which may be understood as an ASIC, such as a neural network processing unit (NPU), a tensor processing unit (TPU), or a deep learning processing unit (DPU), etc.

FIG. 7a shows a schematic diagram of a random access apparatus according to an example embodiment. As shown in FIG. 7a, the random access apparatus 7100 may be, for example, the terminal mentioned above, and the apparatus 7100 includes a transceiving module 7101. Alternatively, the apparatus 7100 may also include any possible modules such as a processing module, which is not limited in the present disclosure. In some embodiments, the transceiving module 7101 is configured to send first information to a first network device. In some embodiments, the transceiving module 7101 is configured to perform at least one of the communication steps S2101, S2102, S2103, S2104, and S2106 or the like performed by the terminal in any of the above methods, but is not limited thereto, which will not be described in detail here.

FIG. 7b shows a schematic diagram of another random access apparatus according to an example embodiment. As shown in FIG. 7b, the random access apparatus 7200 may be, for example, the second network device mentioned above, and the apparatus 7200 includes a transceiving module 7201. Alternatively, the apparatus 7200 may also include any possible modules such as a processing module, which is not limited in the present disclosure. In some embodiments, the transceiving module 7201 is configured to send second information. In some embodiments, the transceiving module 7201 is configured to perform at least one of the communication steps S2101, S2102, S2103, S2104, S2105, and S2106 or the like performed by the second network device in any of the above methods, but is not limited thereto, which will not be described in detail here.

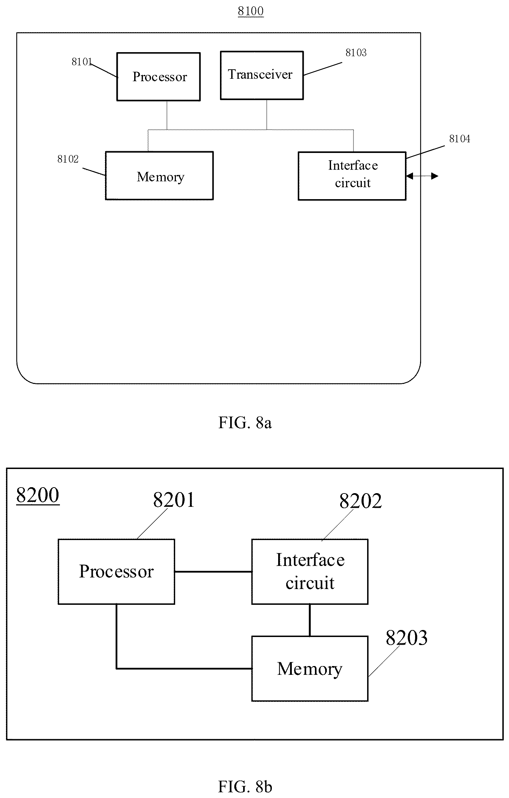

FIG. 8a is a schematic diagram of a structure of a communication device 8100 provided in an embodiment of the present disclosure. The communication device 8100 may be a network device (e.g., an access network device, a core network device, etc.), a terminal (e.g., a user equipment), or a chip, a chip system, or a processor that supports a network device in implementing any of the above methods, or a chip, a chip system, or a processor that supports a terminal in implementing any of the above methods. The communication device 8100 may be configured to implement the method described in the above method embodiments. For details, please refer to the description of the above method embodiments.

As shown in FIG. 8a, the communication device 8100 includes one or more processors 8101. The processor 8101 may be a general-purpose processor or a dedicated processor, such as a baseband processor or a central processing unit (CPU). The baseband processor may be configured to process communication protocols and communication data. The CPU may be configured to control a communication device (e.g., a base station, a baseband chip, a terminal device, a terminal device chip, a DU or a CU, etc.), execute programs, and process program data. The communication device 8100 is configured to perform any of the above methods.

In some embodiments, the communication device 8100 further includes one or more memories 8102 for storing instructions. Optionally, all or a part of the memory 8102 may be located external to the communication device 8100.

In some embodiments, the communication device 8100 further includes one or more transceivers 8103. When the communication device 8100 includes one or more transceivers 8103, the transceiver 8103 performs at least one of the sending and/or receiving communication steps S2101, S2102, S2103, S2104, S2105 and S2106, but not limited to these. The processor 8101 performs other steps, but not limited to these.

In some embodiments, the transceiver may include a receiver and/or a sender, which may be separated or integrated. Alternatively, terms such as the transceiver, the transceiver unit, the transceiver machine, and the transceiver circuit are interchangeable; terms such as the sender, the sending unit, the sender machine, and the sending circuit are interchangeable; and terms such as the receiver, the receiving unit, the receiver machine, and the receiving circuit are interchangeable.

In some embodiments, the communication device 8100 may further include one or more interface circuits 8104. Optionally, the interface circuit 8104 is connected to the memory 8102 and may be configured to receive signals from the memory 8102 or other devices, and may be configured to send signals to the memory 8102 or other devices. For example, the interface circuit 8104 may read instructions stored in the memory 8102 and send the instructions to the processor 8101.

The communication device 8100 described in the above embodiments may be a network device or a terminal, but the scope of the communication device 8100 described in the present disclosure is not limited thereto, and the structure of the communication device 8100 may not be limited to FIG. 8a. The communication device may be an independent device or a part of a larger device. For example, the communication device may be: (1) an independent integrated circuit (IC), or a chip, or a chip system or subsystem; (2) a collection of one or more ICs, optionally, the above IC collection may further include a storage component for storing data and programs; (3) an ASIC, such as a modem; (4) a module that can be embedded in other devices; (5) a receiver, a terminal device, an intelligent terminal device, a cellular phone, a wireless device, a handheld device, a mobile unit, an in-vehicle device, a network device, a cloud device, an artificial intelligence device, etc.; (6) others, etc.

FIG. 8b is a schematic diagram of a structure of a chip 8200 provided in an embodiment of the present disclosure. For the case where the communication device 8100 may be a chip or a chip system, the schematic diagram of the structure of the chip 8200 shown in FIG. 8b may be referred to, but is not limited to thereto.

The chip 8200 includes one or more processors 8201, and the chip 8200 is configured to perform any of the above methods.

In some embodiments, the chip 8200 further includes one or more interface circuits 8202 connected to the memory 8203. Optionally, the interface circuit 8202 may be configured to receive signals from the memory 8203 or other devices, or may be configured to send signals to the memory 8203 or other devices. For example, the interface circuit 8202 may read an instruction stored in the memory 8203 and send the instruction to the processor 8201.

In some embodiments, the interface circuit 8202 performs at least one of the sending and/or receiving communication steps S2101, S2102, S2103, S2104, S2105 and S2106, but not limited to these. The processor 8201 performs other steps, but not limited to these.

In some embodiments, the terms such as the interface circuit, the interface, the transceiver pin, and the transceiver, etc. are interchangeable.

In some embodiments, the chip 8200 further includes one or more memories 8203 for storing instructions. Optionally, all or a part of the memory 8203 may be located external to the chip 8200.

The present disclosure also provides a storage medium. The storage medium described above stores an instruction. The instruction, when run on the communication device 8100, causes the communication device 8100 to perform any of the above methods. Optionally, the storage medium described above is an electronic storage medium. Optionally, the storage medium described above is a computer-readable storage medium, but is not limited thereto. The storage medium may also be a storage medium readable by other devices. Optionally, the storage medium described above may be a non-transitory storage medium, but is not limited thereto. The storage medium described above may also be a transient storage medium.

The present disclosure also provides a program product that, when executed by the communication device 8100, causes the communication device 8100 to perform any of the above methods. Optionally, the program product is a computer program product.

The present disclosure also provides a computer program that, when executed on a computer, causes the computer to perform any of the above methods.

The present disclosure provides a method for receiving the RAR, which enables the terminal to successfully receive the RAR from the serving cell to obtain the TA value of the candidate cell, so that the uplink transmission is no longer required during cell handover, thereby reducing cell handover delay/interruption time.

## Claims

1. A random access method, performed by a terminal, comprising:
sending first information to a first network device, wherein the first information is configured to determine a Timing Advance (TA), the TA is a TA corresponding to the first network device, and the first network device is a network device of a candidate cell; and
receiving second information sent by a second network device, wherein the second information is configured to indicate the TA, and the second network device is a network device of a serving cell.

2. The method according to claim 1, wherein receiving the second information sent by the second network device comprises:
receiving, within a first time window, the second information sent by the second network device, wherein the first time window is determined based on a first time domain position and a first duration.

3. The method according to claim 2, wherein the first duration is determined by at least one of the following manners:
the first duration is determined based on a first predefined rule, wherein the first duration is predefined by the first predefined rule;
the first duration is determined based on a network device configuration; or
the first duration is determined based on a second duration and a third duration, wherein the second duration is a duration configured by a network device, and the third duration is configured by the network device or determined based on the first predefined rule.

4. The method according to claim 3, wherein the first duration is determined based on the second duration and the third duration, and the second information comprises information for indicating a system frame number.

5. The method according to any one of claims 2-4, wherein the first time domain position is determined by at least one of the following manners:
the first time domain position is determined based on a second predefined rule, wherein the first time domain position is predefined by the second predefined rule;
the first time domain position is determined based on a network device configuration; or
the first time domain position is determined based on a second time domain position and a fourth duration, wherein the second time domain position is an end position of a random access channel occasion (RO) for sending the first information, and the fourth duration is configured to indicate a time domain offset between the first time domain position and the second time domain position.

6. The method according to claim 5, wherein the first time domain position is determined based on the second time domain position and the fourth duration, and the first time domain position is a first Orthogonal Frequency Division Multiplexing (OFDM) symbol that is offset by the fourth duration from the second time domain position.

7. The method according to claim 5, wherein the first time domain position is determined based on the second time domain position and the fourth duration, and the first time domain position is a first OFDM symbol of a Control Resource Set (CORESET) corresponding to a type 1 common search space set for the terminal to receive a physical downlink control channel of the first network device or the second network device after a position that is offset by the fourth duration from the second time domain position.

8. The method according to any one of claims 1-7, wherein the method further comprises:
receiving third information sent by the second network device, wherein the third information is configured to indicate to send the first information to the first network device.

9. The method according to claim 8, wherein sending the first information to the first network device comprises:
sending the first information to the first network device based on a target RO;
wherein the target RO is determined by at least one of the following manners:
the target RO is determined based on fourth information, wherein the third information comprises the fourth information, and the fourth information is configured to indicate the target RO;
the target RO is determined based on the fourth information and fifth information, wherein the third information comprises the fourth information and the fifth information, wherein the fourth information is configured to indicate a plurality of ROs, and the fifth information is configured to indicate one of the plurality of ROs as the target RO; or
the target RO is determined based on the fourth information and a third predefined rule, wherein the third information comprises the fourth information, the fourth information is configured to indicate the plurality of ROs, and the third predefined rule predefines selection of one of the plurality of ROs as the target RO.

10. The method according to claim 9, wherein the target RO is determined based on fourth information and the third predefined rule, and the method further comprises:
sending sixth information, wherein the sixth information is configured to indicate the selected RO to the second network device.

11. The method according to any one of claims 1-10, wherein the method further comprises:
sending seventh information, wherein the seventh information is configured to indicate a downlink time difference between the first network device and the second network device.

12. The method according to any one of claims 1-11, wherein the second information is carried in at least one of the following manners:
a defined Medium Access Control Protocol Data Unit (MAC PDU) command; or
a newly added Medium Access Control Control Element (MAC CE) for carrying the second information.

13. The method according to any one of claims 1-12, wherein the second information comprises at least one of the following parameters:
a TA of the candidate cell;
a cell identity of the candidate cell;
a logical identity of the candidate cell; or
a Timing Advance Group (TAG) identity of the candidate cell.

14. The method according to claim 7, wherein the type 1 common search space set of the physical downlink control channel and its associated CORESET are resources of the first network device or the second network device.

15. The method according to claim 7 or 14, wherein receiving, within the first time window, the second information sent by the second network device comprises:
receiving, within the first time window, a Physical Downlink Control Channel (PDCCH) for scheduling a Physical Downlink Shared Channel (PDSCH) resource, wherein the PDSCH resource is configured to send the second information.

16. A random access method, performed by a second network device, comprising:
sending second information, wherein the second information is configured to indicate a Timing Advance (TA), the TA is determined by a first network device based on first information, the TA is a TA corresponding to the first network device, the second network device is a network device of a serving cell, and the first network device is a network device of a candidate cell.

17. The method according to claim 16, wherein sending the second information comprises:
sending the second information within a first time window, wherein the first time window is determined based on a first time domain position and a first duration.

18. The method according to claim 17, wherein the first duration is determined by at least one of the following manners:
the first duration is determined based on a first predefined rule, wherein the first duration is predefined by the first predefined rule;
the first duration is determined based on a network device configuration; or
the first duration is determined based on a second duration and a third duration, wherein the second duration is a duration configured by a network device, and the third duration is configured by the network device or determined based on the first predefined rule.

19. The method according to claim 18, wherein the second information comprises information for indicating a system frame number.

20. The method according to any one of claims 17-19, wherein the first time domain position is determined by at least one of the following manners:
the first time domain position is determined based on a second predefined rule, wherein the first time domain position is predefined by the second predefined rule;
the first time domain position is determined based on a network device configuration; or
the first time domain position is determined based on a second time domain position and a fourth duration, wherein the second time domain position is an end position of a random access channel occasion (RO) for sending the first information, and the fourth duration is configured to indicate a time domain offset between the first time domain position and the second time domain position.

21. The method according to claim 20, wherein the first time domain position is a first Orthogonal Frequency Division Multiplexing (OFDM) symbol that is offset by the fourth duration from the second time domain position.

22. The method according to claim 20, wherein the first time domain position is a first OFDM symbol of a Control Resource Set (CORESET) corresponding to a type 1 common search space set of a physical downlink control channel sent by the first network device or the second network device after a position that is offset by the fourth duration from the second time domain position.

23. The method according to any one of claims 16-22, wherein the method further comprises:
sending third information, wherein the third information is configured to indicate to the terminal to send the first information to the first network device.

24. The method according to claim 23, wherein the third information is further configured to indicate to the terminal to send, based on a target RO, the first information to the first network device,
wherein the target RO is determined by at least one of the following manners:
the target RO is determined based on fourth information, wherein the third information comprises the fourth information, and the fourth information is configured to indicate the target RO;
the target RO is determined based on the fourth information and fifth information, wherein the third information comprises the fourth information and the fifth information, wherein the fourth information is configured to indicate a plurality of ROs, and the fifth information is configured to indicate one of the plurality of ROs as the target RO; or
the target RO is determined based on the fourth information and a third predefined rule, wherein the third information comprises the fourth information, the fourth information is configured to indicate the plurality of ROs, and the third predefined rule predefines selection of one of the plurality of ROs as the target RO.

25. The method according to claim 24, wherein the target RO is determined based on the fourth information and the third predefined rule, and the method further comprises:
receiving sixth information, wherein the sixth information is configured to indicate a RO selected by the terminal.

26. The method according to any one of claims 16-25, wherein the method further comprises:
receiving seventh information, wherein the seventh information is configured to indicate a downlink time difference between the first network device and the second network device.

27. The method according to any one of claims 16-26, wherein the second information is carried in at least one of the following manners:
a defined Medium Access Control Protocol Data Unit (MAC PDU) command; or
a newly added Medium Access Control Control Element (MAC CE) for carrying the second information.

28. The method according to any one of claims 16-27, wherein the second information comprises at least one of the following parameters:
a TA of the candidate cell;
a cell identity of the candidate cell;
a logical identity of the candidate cell; or
a Timing Advance Group (TAG) identity of the candidate cell.

29. The method according to claim 22, wherein the type 1 common search space set of the physical downlink control channel and its associated CORESET are resources of the first network device or the second network device.

30. The method according to claim 22 or 29, wherein sending the second information within the first time window comprises:
sending, within the first time window, a Physical Downlink Control Channel (PDCCH) for scheduling a Physical Downlink Shared Channel (PDSCH) resource, wherein the PDSCH resource is configure to send the second information.

31. A random access method, comprising:
sending, by a terminal, first information to a first network device, wherein the first information is configured to determine a Timing Advance (TA), the TA is a TA corresponding to the first network device, and the first network device is a network device of a candidate cell;
sending, by a second network device, second information to the terminal, wherein the second information is configured to indicate the TA, and the second network device is a network device of a serving cell; and
receiving, by the terminal, the second information sent by the second network device.

32. A terminal, comprising a transceiving module;
the transceiving module is configured to send first information to a first network device, wherein the first information is configured to determine a Timing Advance (TA), the TA is a TA corresponding to the first network device, and the first network device is a network device of a candidate cell; and
the transceiving module is further configured to receive second information sent by a second network device, wherein the second information is configured to indicate the TA, and the second network device is a network device of a serving cell.

33. A network device, comprising a transceiving module;
the transceiving module is configured to send second information, wherein the second information is configured to indicate a Timing Advance (TA), the TA is determined by a first network device based on first information, the TA is a TA corresponding to the first network device, the second network device is a network device of a serving cell, and the first network device is a network device of a candidate cell.

34. A terminal, comprising:
one or more processors;
wherein the terminal is configured to perform the random access method according to any one of claims 1-15.

35. A network device, comprising:
one or more processors;
wherein the network device is configured to perform the random access method according to any one of claims 16-30.

36. A communication system, comprising a terminal and a network device, wherein the terminal is configured to implement the random access method according to any one of claims 1-15, and the network device is configured to implement the random access method according to any one of claims 16-30.

37. A storage medium having instructions stored, wherein the instructions, when run on a communication device, cause the communication device to perform the random access method according to any one of claims 1-15 or 16-30.
